# EUROPEAN PATENT APPLICATION

(11) **EP 4 827 198 A1**
(43) Date of publication of application: **21.10.2026**
(21) Application number: 24915988.0
(22) Date of filing: 10.01.2024
(51) Int. Cl.: H04W 72/0446

(54) **WIRELESS COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: LENG, Bingxue, Dongguan, Guangdong 523860 (CN); LU, Qianxi, Dongguan, Guangdong 523860 (CN); FU, Zhe, Dongguan, Guangdong 523860 (CN); YU, Xinlei, Dongguan, Guangdong 523860 (CN)
(74) Representative: Mewburn Ellis LLP
(86) International application number: PCT/CN2024/071639
(87) International publication number: WO 2025/147911

(57) **Abstract**

A method for wireless communication, a terminal device, and a network device are provided. The method for wireless communication includes the following. A terminal device performs a first operation, where the first operation includes one or more of: dropping one or more measurement occasions, determining that the one or more measurement occasions share time-domain resources with data transmission, or performing uplink (UL)/downlink (DL) data transmission during a period corresponding to the one or more measurement occasions, where the one or more measurement occasions are used for radio resource management (RRM) measurement.

## Description

### TECHNICAL FIELD

This disclosure relates to the field of communication technologies, in particular to a method for wireless communication, a terminal device, and a network device.

### BACKGROUND

Radio resource management (RRM) measurement may cause service interruption, which results in a relatively large transmission delay for corresponding services, making it impossible to meet low-delay requirements of certain services (e.g., extended reality (XR) services).

### SUMMARY

A method for wireless communication, a terminal device, and a network device are provided in the disclosure. Various aspects of the disclosure are introduced below.

In a first aspect, a method for wireless communication is provided. The method includes the following. A terminal device performs a first operation, where the first operation includes one or more of: dropping one or more measurement occasions, determining that the one or more measurement occasions share time-domain resources with data transmission, or performing uplink (UL)/downlink (DL) data transmission during a period corresponding to the one or more measurement occasions, where the one or more measurement occasions are used for radio resource management (RRM) measurement.

In a second aspect, a method for wireless communication is provided. The method includes the following. A terminal device adjusts first configuration information when a first condition is satisfied, where the first configuration information is used for RRM measurement.

In a third aspect, a method for wireless communication is provided. The method includes the following. A network device sends target information to a terminal device, where the target information is one of: a first command used to trigger the terminal device to perform a first operation, or first configuration information used to configure the terminal device to perform the first operation. The first operation includes one or more of: dropping one or more measurement occasions, determining that the one or more measurement occasions share time-domain resources with data transmission, or performing UL/DL data transmission during a period corresponding to one or more measurement occasions, where the one or more measurement occasions are used for RRM measurement.

In a fourth aspect, a method for wireless communication is provided. The method includes the following. A network device sends second information to a terminal device, where the second information is used to: reconfigure first configuration information used for RRM measurement, or indicate that the terminal device is to switch from the first configuration information to second configuration information used for RRM measurement.

In a fifth aspect, a terminal device is provided. The terminal device includes an execution unit. The execution unit is configured to perform a first operation, where the first operation includes one or more of: dropping one or more measurement occasions, determining that the one or more measurement occasions share time-domain resources with data transmission, or performing UL/DL data transmission during a period corresponding to the one or more measurement occasions, where the one or more measurement occasions are used for RRM measurement.

In a sixth aspect, a terminal device is provided. The terminal device includes an adjustment unit. The adjustment unit is configured to adjust first configuration information when a first condition is satisfied, where the first configuration information is used for RRM measurement.

In a seventh aspect, a network device is provided. The network device includes a first sending unit. The first sending unit is configured to send target information to a terminal device, where the target information is one of: a first command used to trigger the terminal device to perform a first operation, or first configuration information used to configure the terminal device to perform the first operation. The first operation includes one or more of: dropping one or more measurement occasions, determining that the one or more measurement occasions share time-domain resources with data transmission, or performing UL/DL data transmission during a period corresponding to one or more measurement occasions, where the one or more measurement occasions are used for RRM measurement.

In an eighth aspect, a network device is provided. The network device includes a sending unit. The sending unit is configured to send second information to a terminal device, where the second information is used to: reconfigure first configuration information used for RRM measurement, or indicate that the terminal device is to switch from the first configuration information to second configuration information used for RRM measurement.

In a ninth aspect, a terminal device is provided. The terminal device includes a transceiver, a memory, and a processor. The memory is configured to store a program. The processor is configured to invoke the program stored in the memory and control the transceiver to receive or send signals, to cause the terminal device to perform the method in the first aspect or the second aspect.

In a tenth aspect, a network device is provided. The network device includes a transceiver, a memory, and a processor. The memory is configured to store a program. The processor is configured to invoke the program stored in the memory and control the transceiver to receive or send signals, to cause the network device to perform the method in the third aspect and or fourth aspect.

In an eleventh aspect, an apparatus is provided. The apparatus includes a processor. The processor id configured to invoke a program stored in a memory, to cause the apparatus to perform the method in any one of the first aspect to the fourth aspect.

In a twelfth aspect, a chip is provided. The chip includes a processor. The processor is configured to invoke a program stored in a memory, to cause a device equipped with the chip to perform the method in any one of the first aspect to the fourth aspect.

In a thirteenth aspect, a computer-readable storage medium is provided. The computer-readable storage medium stores a program operable with a computer to perform the method in any one of the first aspect to the fourth aspect.

In a fourteenth aspect, a computer program product is provided. The computer program product includes a program operable with a computer to perform the method in any one of the first aspect to the fourth aspect.

In a fifteenth aspect, a computer program is provided. The computer program is operable with a computer to perform the method in any one of the first aspect to the fourth aspect.

In embodiments of the disclosure, data transmission is supported at RRM measurement occasions, thereby reducing data transmission delay.

### BRIEF DESCRIPTION OF THE DRAWINGS

FIG. 1 is an exemplary architectural diagram illustrating a system for wireless communication to which embodiments of the disclosure are applicable.
FIG. 2 is a schematic flowchart of a method for wireless communication provided in an embodiment of the disclosure.
FIG. 3 is a schematic flowchart illustrating a method for wireless communication provided in another embodiment of the disclosure.
FIG. 4 is a schematic flowchart illustrating a method for wireless communication provided in yet another embodiment of the disclosure.
FIG. 5 is a schematic flowchart illustrating a method for wireless communication provided in yet another embodiment of the disclosure.
FIG. 6 is a schematic flowchart of a method for wireless communication provided in yet another embodiment of the disclosure.
FIG. 7 is a schematic flowchart illustrating a method for wireless communication provided in yet another embodiment of the disclosure.
FIG. 8 is a schematic structural diagram of a terminal device provided in an embodiment of the disclosure.
FIG. 9 is a schematic structural diagram of a terminal device provided in another embodiment of the disclosure.
FIG. 10 is a schematic structural diagram of a network device provided in an embodiment of the disclosure.
FIG. 11 is a schematic structural diagram of a network device provided in another embodiment of the disclosure.
FIG. 12 is a schematic diagram of an apparatus to which embodiments of the disclosure are applicable.

### DETAILED DESCRIPTION

Technical solutions of the disclosure will be elaborated below with reference to accompanying drawings.

### Wireless communication system

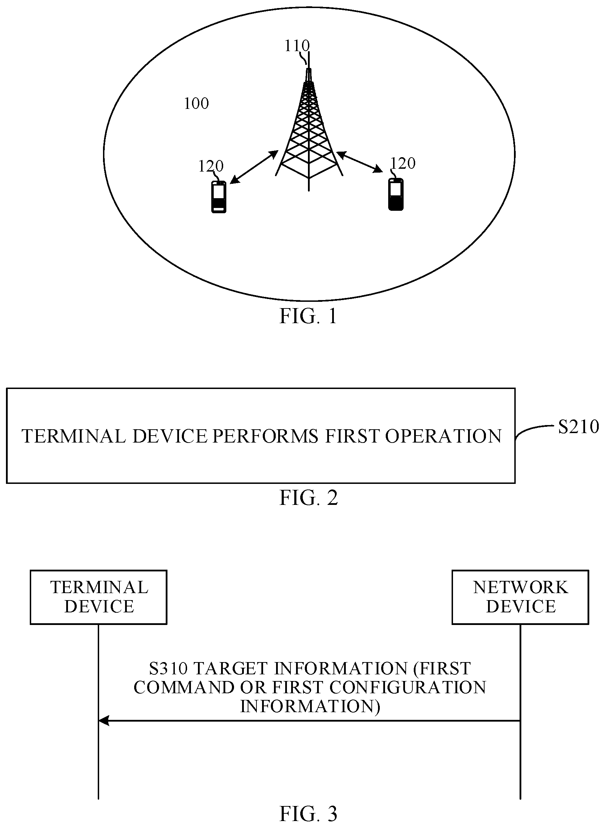

FIG. 1 is an exemplary architectural diagram illustrating a system for wireless communication 100 to which embodiments of the disclosure are applicable. The system for wireless communication 100 may include a network device 110 and a terminal device 120. The network device 110 can be a device that communicates with the terminal device 120. The network device 110 can provide network coverage for a specific geographical area and communicate with a terminal device(s) 120 in the coverage area. The terminal device 120 can access a network (e.g., a wireless network) through the network device 110. Optionally, the system for wireless communication 100 may further include other network entities, such as a network controller, a mobility management entity (MME), etc., which are not limited in embodiments of the disclosure.

It may be understood that, the technical solutions of embodiments of the disclosure are applicable to various communication systems, such as a 5th generation (5G) system or a new radio (NR) system, a long-term evolution (LTE) system, an LTE frequency division duplex (FDD) system, an LTE time division duplex (TDD) system, etc. The technical solutions provided in the disclosure are also applicable to future communication systems, such as a sixth-generation (6G) mobile communication system, a satellite communication system, etc.

The terminal device in embodiments of the disclosure may also be referred to as a user equipment (UE), an access terminal, a subscriber unit, a subscriber station, a mobile station (MS), a mobile terminal (MT), a remote station, a remote terminal, a mobile device, a user terminal, a terminal, a wireless communication device, a user agent, a user apparatus, etc. The terminal device in embodiments of the disclosure may be a device that provides voice and/or data connectivity to a user and is capable of connecting people, objects, and machines, such as a handheld device with a wireless connection function, a vehicle-in device, etc. The terminal device in embodiments of the disclosure may be a mobile phone, a pad, a laptop computer, a palmtop computer, a mobile internet device (MID), a wearable device, a virtual reality (VR) device, an augmented reality (AR) device, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. Optionally, the terminal device may be used to act as a base station. For example, the terminal device may act as a scheduling entity that provides a sidelink signal between terminal devices in vehicle-to-everything (V2X), device-to-device (D2D), etc. For example, a cellular phone and a vehicle communicate with each other by using a sidelink signal. A cellular phone and a smart home device communicate with each other, without relaying a communication signal by using a base station.

The network device in embodiments of the disclosure may be a device for communicating with the terminal device, and the network device may also be referred to as an access network (AN) device or a radio access network (RAN) device. For example, the network device may be a base station. The base station may broadly cover various names in the following, or may be interchangeable with one of the following names: a node B (NodeB), an evolved NodeB (eNB), a next generation NodeB (gNB), a relay station, an access point (AP), a transmission reception point (TRP), a home base station, a network controller, an access node, a radio node, an AP, a transmission node, a transceiver node, a baseband unit (BBU), a remote radio unit (RRU), an active antenna unit (AAU), a remote radio head (RRH), a central unit (CU), a distributed unit (DU), a positioning node, etc. The base station may be a macro base station, a micro base station, a relay node, a donor node, etc., or a combination thereof.

Communication between the terminal devices may be performed through a sidelink. Sidelink communication may also be referred to as proximity services (ProSe) communication, unilateral communication, bylink communication, or D2D communication.

### Measurement gap (MG)

To enable inter-frequency measurement or intra-frequency measurement, a concept of MG is introduced. In NR, a gap may include an MG configuration per terminal device, or an MG configuration per frequency range (FR). Regardless of the configuration granularity, an MG configuration needs to contain a measurement gap length (MGL), a measurement gap repetition period (MGRP), a gap offset (GO), etc. MGL represents the length of an MG. Assuming that the value of the MGL is 6 milliseconds (ms), then it means that within 6 ms, a terminal device needs to perform intra-frequency measurement or inter-frequency measurement and cannot perform data transmission on a current serving cell corresponding to a frequency point related to an MG configuration. MGRP represents a repetition period of an MG, e.g., if a value of the MGRP is 40 ms, then it means that an MG appears every 40 ms. GO identifies an offset position of a repetition period for an MG.

During an MG, the terminal device needs to stop normal uplink (UL)/downlink (DL) data transmission on a serving cell in a corresponding frequency domain until the MG ends. Detailed specifications are as follows.

During an MG, a medium access control (MAC) entity shall perform the following specifications:
1> not perform the transmission of hybrid automatic repeat request acknowledgement (HARQ), channel-state information (CSI), and scheduling request (SR);
2> not report sounding reference signal (SRS); and
3> not transmit on uplink shared channel (UL-SCH) except for message 3 (Msg3);
4> if *ra-ResponseWindow* or *ra-ContentionResolutionTimer* is running, monitor physical downlink control channel (PDCCH) as specified in subclauses 5.1.4 and 5.1.5; else, not monitor the PDCCH, and not receive on downlink shared channel (DL-SCH).

### Without a configured measurement gap (MG)

Unlike LTE, NR measurements are categorized into an NR measurement with a configured MG(s) and an NR measurement without a configured MG(s). When a synchronization signal block (SSB) of a neighboring cell for an intra-frequency measurement is completely contained within an activated bandwidth part (BWP) for the terminal device, or when an activated DL BWP is an initial BWP, the intra-frequency measurement does not require configuration of an MG(s). Otherwise, the intra-frequency measurement requires configuration of an MG(s).

In an R16 RRM enhancement project, an important topic is the enhancement of inter-frequency measurement without requiring an MG(s). If *needforgap* information for a current inter-frequency point, either reported by the terminal device or configured by a network, indicates that a gap(s) is needed ("gap"), and the terminal device supports the capability of performing gap-free inter-frequency measurement, then once a target SSB falls within the activated BWP for the terminal device, the terminal device is still allowed to perform gap-free measurement outside a gap. If the *needforgap* information for the current inter-frequency point, either reported by the terminal device or configured by the network, indicates that a gap is not needed ("no-gap"), it is directly determined that the terminal device does not need a gap(s) for measurements on the corresponding frequency point, and whether the terminal device supports the capability of performing gap-free inter-frequency measurement is not required to be determined.

In a gap-free measurement scenario, restrictions on a transmission and reception behavior of the terminal device are as follows, and the following takes SSB-based gap-free intra-frequency measurement as an example to specifically illustrate requirements for scheduling restrictions. In R15, the capability to simultaneously receive data and SSBs with different subcarrier spacings (SCSs) is defined as an optional capability of the terminal device. From the perspective of implementation of the terminal device, a terminal device with such a capability can perform two fast Fourier transformation (FFT) operations simultaneously, to process signals with different SCSs. If the terminal device does not support such a capability, then the terminal device cannot simultaneously process these two types of signals with different SCSs, and thus the terminal device does not expect to send physical uplink control channel (PUCCH)/physical uplink shared channel (PUSCH)/sounding reference signal (SRS), nor to receive PDCCH/physical downlink shared channel (PDSCH)/tracking reference signal (TRS)/ channel-state information-reference signal (CSI-RS) for channel quality indicator (CQI) feedback, etc., on any symbol where a current measurement SSB is received. In addition, due to operations such as synchronization, etc., a symbol immediately preceding and a symbol immediately following these consecutive SSB symbols are also not allowed for the above transmissions.

### Measurement gap (MG) enhancement

1) Per-MG: a pre-configured MG that supports activation or deactivation that is network-controlled or UE-based under certain conditions, such as during BWP switching.
2) Concurrent MG: multiple MGs (with different patterns) are configured for different reference signals (RSs), including per-FR/per-UE, and priorities of different MGs are configured.
3) Network-controlled small gap (NCSG)

The purpose of an NCSG scheme is to reduce transmission interruption caused by RRM measurement, and an NCSG pattern is defined by defining a visible interruption length (VIL)/measurement length (ML). During a VIL, the terminal device does not perform UL and DL transmissions. During an ML, the terminal device does not expect to send PUCCH/PUSCH/SRS nor to receive PDCCH/PDSCH/TRS/CSI-RS for CQI feedback, etc., on any symbol where a current measurement SSB is received. In addition, due to operations such as synchronization, etc., a symbol immediately preceding and a symbol immediately following these consecutive SSB symbols are also not allowed for the above transmissions.

As can be seen from the above, RRM measurement may cause service interruption, which results in a relatively large transmission delay for corresponding services, making it impossible to meet low-delay requirements of certain services (e.g., XR services).

For the above issues, embodiments of the disclosure are introduced in detail below.

### Embodiment 1

FIG. 2 is a schematic flowchart of a method for wireless communication provided in Embodiment 1 of the disclosure. The method as illustrated in FIG. 2 may be performed by a terminal device, and the terminal device may be, for example, the terminal device 120 mentioned above.

Reference may be made to FIG. 2, at S210, the terminal device performs a first operation, where the first operation includes one or more of: dropping one or more measurement occasions (dropping a measurement occasion may also be referred to as ignoring the measurement occasion or de-activating the measurement occasion), determining that the one or more measurement occasions share time-domain resources with data transmission, or performing UL/DL data transmission during a period(s) corresponding to the one or more measurement occasions. The one or more measurement occasions are used for RRM measurement. In embodiments of the disclosure, data transmission is supported at RRM measurement occasions, thereby reducing data transmission delay, and thus improving system throughput and capacity.

For an RRM measurement based on an MG, the period corresponding to the measurement occasion mentioned in embodiments of the disclosure may refer to the MG. For RRM measurement without a configured MG, the period corresponding to the measurement occasion may refer to a slot or a symbol during which data transmission is interrupted during RRM measurement. For example, for an NCSG, a period corresponding to a measurement occasion may be considered as a VIL during which data transmission is interrupted. For an SSB-based measurement timing configuration (SMTC), the period corresponding to the measurement occasion may refer to an SSB slot during which data interruption occurs.

Further, in some embodiments, the period corresponding to the measurement occasion may further include a third period preceding the measurement occasion and/or a fourth period following the measurement occasion. Taking SMTC as an example, the period corresponding to the measurement occasion may include an SSB slot during which data interruption occurs and 1 ms/*T* ms preceding and following the SSB slot.

Before the operations at S210 are performed, information/signalling can be exchanged between the terminal device and a network device, to prepare for the execution of the first operation.

In some embodiments, before the operations at S210, the terminal device can receive first capability information sent by the network device, where the first capability information indicates whether the network device supports the terminal device in performing the first operation. For example, a mode of scheduling UL/DL data at a measurement occasion provided in embodiments of the disclosure may be referred to as an enhanced scheduling mechanism. Correspondingly, the first capability information can indicate whether the network device supports the enhanced scheduling mechanism. Further, in some embodiments, the first capability information may be associated with one or more of: a band, a band combination, a carrier, a BWP, an intra-frequency, or an inter-frequency.

In some embodiments, before the operations at S210, the terminal device can send second capability information to the network device, where the second capability information indicates whether the terminal device is capable of performing the first operation. For example, the mode of scheduling UL/DL data at the measurement occasion provided in embodiments of the disclosure may be referred to as the enhanced scheduling mechanism. Correspondingly, the second capability information can indicate whether the terminal device supports the enhanced scheduling mechanism. Further, in some embodiments, the second capability information may be associated with one or more of: a band, a band combination, a carrier, a BWP, an intra-frequency, or an inter-frequency.

In some embodiments, before the operations at S210, service information can be exchanged between the terminal device and the network device. For example, the terminal device can report UL service-related information to the network device, including a service type (e.g., an XR-related service), a quality of service (QoS) requirement (a delay requirement, etc.), a data periodicity, a data arrival time, an arrival time jitter, etc.

In some embodiments, before the operations at S210, reference may be made to S310 in FIG. 3, the terminal device can first receive target information from the network device, where the target information includes configuration information. The configuration information may include one or more of: first configuration information used to configure the terminal device to perform the first operation, second configuration information related to RRM measurement, third configuration information related to scheduling by the network device, fourth configuration information used to configure a time-domain resource sharing mode between the one or more measurement occasions and data transmission, fifth configuration information related to data status reporting by the terminal device, or sixth configuration information used to configure a maximum number or a maximum proportion of discardable measurement occasions/measurement slots.

The first configuration information may be referred to as configuration information related to the enhanced scheduling mechanism. The first configuration information may include a configuration on how to determine whether a measurement occasion is to be dropped and which measurement occasion is to be dropped.

In some embodiments, the first configuration information is used to configure a first period. The first period may be understood as a period during which the enhanced scheduling mechanism is active. The first period is used for the terminal device to perform the first operation. For example, the first configuration information may be used to configure one or more of: a start time of the first period, or a duration of the first period. The first configuration information may configure the start time of the first period. Alternatively, the start time of the first period may be determined during actual interaction. The first configuration information may directly indicate the duration of the first period, or may be used to configure a first timer to determine the duration of the first period. For example, a timing duration of the first timer may be determined as the duration of the first period. For example, the first configuration information is used to configure the start time of the first period and the duration of the first period. For another example, the first configuration information is used to configure the first timer, and a running time of the first timer is determined as the first period.

As mentioned above, the first period is used for the terminal device to perform the first operation. For example, the terminal device may drop all measurement occasions within the first period. Alternatively, if a measurement object associated with a measurement occasion supports an enhanced scheduling operation, then the terminal device may drop such a measurement occasion. If a part of a measurement occasion is within the first period, then the measurement occasion may be dropped or may not be dropped.

In some embodiments, the first configuration information may be used to configure a second period, where the second period is used for the terminal device to determine whether to perform the first operation. Therefore, the second period may also be referred to as a determination time for the terminal device. For example, the second period may include *X* time units preceding each measurement occasion, where the time unit may be a slot, a millisecond, or a symbol, and *X* is a positive integer greater than or equal to 1.

A duration of the second period may be fixed, or may be associated with one or more of: a measurement object (or referred to as a measurement target), a frequency range (FR), or a measurement type, where the measurement type includes an intra-frequency measurement and/or an inter-frequency measurement.

For example, for measurement object 1, the value of the second period is value 1; and for measurement object 2, the value of the second period is value 2.

For another example, for FR1, the value of the second period is value 1; and for measurement object 2, the value of the second period is value 2.

For another example, for intra-frequency measurement, the value of the second period is value 1; and for inter-frequency measurement, the value of the second period is value 2.

In some embodiments, the second configuration information (the configuration information related to RRM measurement) is used to configure one or more of: whether a measurement object corresponding to RRM measurement supports the terminal device in performing the first operation (i.e., whether the enhanced scheduling mechanism provided in the disclosure is supported, i.e., at an RRM measurement occasion, no RRM measurement is to be performed, but UL/DL transmission is to be performed), a priority of the measurement object corresponding to RRM measurement, or a measurement threshold corresponding to RRM measurement.

In some embodiments, the measurement threshold corresponding to RRM measurement is associated with one or more of (or the measurement threshold corresponding to RRM measurement is used to evaluate one or more of): signal quality of a serving cell (e.g., a current cell), signal quality of a neighbour cell, a signal quality difference between the serving cell and the neighbour cell, a change in the signal quality of the serving cell, or a change in the signal quality of the neighbour cell.

In some embodiments, after the measurement threshold is configured, the terminal device can send a measurement result to the network device according to the measurement threshold corresponding to RRM measurement.

In some embodiments, the third configuration information (the configuration information related to scheduling by the network device, or referred to as scheduling configuration) may be used to configure one or more of: whether scheduling by the network device is allowed within the one or more measurement occasions, or a priority of scheduling by the network device.

In some embodiments, the fourth configuration information may be used to configure the time-domain resource sharing mode between the one or more measurement occasions and data transmission. For example, the measurement occasion is an MG, and the fourth configuration information may be referred to as measurement gap sharing information. Further, in some embodiments, the fourth configuration information may be used to configure a sharing proportion between a measurement occasion and data transmission. For example, the fourth configuration information may indicate that an entire measurement occasion is used for data transmission. For another example, the fourth configuration information may indicate a proportion (e.g., a percentage) of a measurement occasion used for data transmission. Besides being configured by the network device, the time-domain resource sharing mode between a measurement occasion and data transmission may be a default mode predefined by a protocol. Alternatively, a default proportion, such as 50%, may be applied to time-domain resources between measurement occasions and data transmission.

In some embodiments, the fifth configuration information (related to data status reporting by the terminal device) may be used to configure a threshold(s) related to data status reporting. The threshold(s) may include one or more of: a threshold for a data volume, a threshold for a data priority, or a threshold for a remaining data delay.

Correspondingly, the terminal device can report a data status to the network device according to the threshold(s) configured by the fifth configuration information.

The configuration information from the network device may be common configuration information, or may be associated with one of: an FR (FR1 or FR2); a measurement type, where the measurement type includes an intra-frequency measurement and/or an inter-frequency measurement; a measurement object; a data priority (or a data transmission priority); a remaining data delay; a data volume; cell information; or a BWP.

Reference may be made to FIG. 2 again, the first operation at S210 may be controlled (triggered) by the network device, or may be autonomously triggered by the terminal device according to certain conditions. Two possible triggering modes are elaborated below with reference to two embodiments.

### Embodiment 1.1: the network device triggers the first operation

In some embodiments, reference may be made to S310 in FIG. 3 again, the first operation is triggered based on a first command (or first signalling) in the target information sent by the network device. The first command may be referred to as an ignore command, a drop command, or a de-activation command, and the first command indicates that the terminal device is to drop one or more measurement occasions. The first command may be carried in radio resource control (RRC) signaling, an MAC control element (CE), or downlink control information (DCI).

The first command may be a simple trigger command. Alternatively, the first command may further contain some indication information. For example, the first command may contain first information, where the first information is used to determine a measurement occasion that is required or allowed to be dropped.

Exemplarily, the first information includes one or more of: the measurement occasion that is required or allowed to be dropped, a priority of a measurement object that is required or allowed to be dropped, or a priority of data to be transmitted.

For example, if the first information indicates the priority of the measurement object that is required or allowed to be dropped, then the terminal device can drop a measurement occasion(s) associated with a measurement object(s) having a priority lower than the priority.

For another example, if the first information indicates the priority of the data to be transmitted, then the terminal device can drop a measurement occasion(s) associated with a measurement object(s) having a priority lower than the priority.

After receiving the first command, the terminal device can drop a measurement occasion(s) and/or perform UL/DL data transmission according to the first command. For example, the terminal device may drop one or more measurement occasions within the first period. The first period may be determined based on the configuration from the network device and/or a reception time for the first command.

For example, if both the start time of the first period and the duration of the first period are based on the configuration from the network device, then the terminal device can determine the first period according to the configuration of both the start time and the duration. Then, the terminal device can drop all measurement occasions that are allowed to be dropped within the first period (or share the measurement occasions with data transmission), and perform data transmission/reception according to UL/DL scheduling by the network device.

For another example, the start time of the first period is determined based on the reception time for the first command (e.g., equal to the reception time for the first command), and the duration of the first period is determined based on the configuration from the network device or based on the timing duration of the first timer. In this case, the terminal device can determine the first period according to the reception time for the first command and the configuration information from the network device (or the timing duration of the first timer). Then, the terminal device can drop all measurement occasions that are allowed to be dropped within the first period (or share the measurement occasions with data transmission), and perform data transmission/reception according to UL/DL scheduling by the network device.

In some embodiments, during the second period preceding each measurement occasion (e.g., *X* slots, *X* ms, or *X* symbols preceding each measurement occasion), the terminal device can determine, according to the received first command, whether to perform RRM measurement at the measurement occasion. If the terminal device does not need to perform RRM measurement, the terminal device can perform UL/DL transmission at the measurement occasion. For example, the terminal device can determine, according to an indication from the network device, whether there is UL/DL scheduling in a subsequent measurement occasion. If there is UL/DL scheduling, then the terminal device does not need to perform RRM measurement but rather perform UL/DL transmission.

In some embodiments, if the terminal device performs UL transmission at a measurement occasion, then the terminal device can send corresponding UL data according to a scheduling configuration from the network device. For example, the scheduling configuration may include one or more of: a priority configuration for UL transmission scheduled by the network device, a logical channel configuration, a configuration of remaining data delay requirements, etc.

In some embodiments, if the terminal device performs DL transmission at a measurement occasion, then a manner in which the terminal device monitors DL transmission may be determined according to a network implementation.

In some embodiments, before the operations at S210 are performed, the terminal device can send second information to the network device, where the second information indicates a request to the network device for performing the first operation. The second information may be triggered based on a condition. For example, the second information is triggered based on a first condition, where the first condition is associated with one or more of: whether the network device supports the terminal device in performing the first operation; a priority of the one or more measurement occasions; a priority of the data to be transmitted, a scheduling mode for the data to be transmitted, where the scheduling mode includes configured grant (CG)-based scheduling and/or dynamic grant (DG)-based scheduling; a priority of scheduling by the network device; a remaining delay required for the data to be transmitted; coverage condition information of the terminal device; a transmission type for the data to be transmitted, where the transmission type includes new transmission and/or retransmission; whether a maximum number of discardable measurement occasions/measurement slots (slots used for RRM measurement) is exceeded; or whether a maximum proportion of discardable measurement occasions/measurement slots (slots used for RRM measurement) is exceeded.

Whether the network device supports the terminal device in performing the first operation may also be understood as whether the network device supports an enhanced scheduling mode provided in embodiments of the disclosure. Whether the network device supports the enhanced scheduling mode may be indicated by capability information sent by the network device, or may be determined based on whether the network device configures configuration information related to the enhanced scheduling mode.

The priority of the one or more measurement occasions may be determined, for example, based on the priorities (or priority configurations) of the measurement objects associated with the one or more measurement occasions.

The priority of the data to be transmitted (data to be sent/received) may be determined, for example, based on the highest (or the lowest) priority of data in a buffer. Alternatively, the priority of the data to be transmitted may be determined based on a priority of a logical channel with the minimum (or the maximum) remaining delay.

The remaining delay required for the data to be transmitted may be determined based on a packet delay budget (PDB) of the data to be transmitted, a delay state (DS), and a discard timer.

The priority of the data to be transmitted may be determined based on one or more of: the highest priority of the data to be transmitted, or a priority of a logical channel with the minimum remaining delay.

The coverage condition information may be determined based on one or more of: signal quality of a serving cell, signal quality of a neighbour cell, a change in the signal quality of the serving cell, a change in the signal quality of the neighbour cell, or a signal quality difference between the serving cell and the neighbour cell.

### Embodiment 1.2: the terminal device autonomously triggers the first operation

In some embodiments, the first operation mentioned at S210 may be determined based on a second condition. That is, if the second condition is satisfied, then the terminal device can autonomously trigger the first operation.

In some embodiments, the second condition is associated with one or more of: whether the network device supports the terminal device in performing the first operation; a priority of the one or more measurement occasions; a priority of the data to be transmitted, a scheduling mode for the data to be transmitted, where the scheduling mode includes CG-based scheduling and/or DG-based scheduling; a priority of scheduling by the network device; a remaining delay required for the data to be transmitted; coverage condition information of the terminal device; a transmission type for the data to be transmitted, where the transmission type includes new transmission and/or retransmission; whether a maximum number of discardable measurement occasions/measurement slots (slots used for RRM measurement) is exceeded; or whether a maximum proportion of discardable measurement occasions/measurement slots (slots used for RRM measurement) is exceeded.

Whether the network device supports the terminal device in performing the first operation may also be understood as whether the network device supports an enhanced scheduling mode provided in embodiments of the disclosure. Whether the network device supports the enhanced scheduling mode may be indicated by capability information sent by the network device, or may be determined based on whether the network device configures configuration information related to the enhanced scheduling mode.

The priority of the one or more measurement occasions may be determined, for example, based on the priorities (or priority configurations) of the measurement objects associated with the one or more measurement occasions.

The priority of the data to be transmitted (data to be sent/received) may be determined, for example, based on the highest (or the lowest) priority of data in a buffer. Alternatively, the priority of the data to be transmitted may be determined based on a priority of a logical channel with the minimum (or the maximum) remaining delay.

The remaining delay required for the data to be transmitted may be determined based on a PDB of the data to be transmitted, a DS, and a discard timer.

The priority of the data to be transmitted may be determined based on one or more of: the highest priority of the data to be transmitted, or a priority of a logical channel with the minimum remaining delay.

The coverage condition information may be determined based on one or more of: signal quality of a serving cell, signal quality of a neighbour cell, a change in the signal quality of the serving cell, a change in the signal quality of the neighbour cell, or a signal quality difference between the serving cell and the neighbour cell.

For example, the second condition includes one or more of the following: a coverage condition indicated by the coverage condition information satisfies a third condition; or the priority of the one or more measurement occasions (may be determined based on the lowest priority or the highest priority among respective priorities corresponding to the one or more measurement occasions) is lower than or equal to the priority of the data to be transmitted.

For another example, the second condition includes one or more of the following: the coverage condition indicated by the coverage condition information satisfies the third condition; or the priority of the data to be transmitted is higher than or equal to a second priority.

In some embodiments, during the second period preceding each measurement occasion (e.g., *X* slots, *X* ms, or *X* symbols preceding each measurement occasion), the terminal device can determine whether to perform RRM measurement at the measurement occasion. If the terminal device does not need to perform RRM measurement, the terminal device can perform UL/DL transmission at the measurement occasion. For example, the terminal device can determine, according to an indication from the network device, whether there is UL/DL scheduling in a subsequent measurement occasion. If there is UL/DL scheduling, then the terminal device does not need to perform RRM measurement but rather perform UL/DL transmission.

In some embodiments, before the terminal device performs the first operation, the terminal device may send third information to the network device, where the third information indicates that the first terminal device determines or is ready to or is about to perform the first operation. The third information may be referred to as UL indication information. The third information may be carried in RRC, an MAC CE, or a PUCCH.

The third information may be sent autonomously by the terminal device, or may be sent based on a request from the network device. For example, before the terminal device sends the third information to the network device, the terminal device receives fourth information sent by the network device, where the fourth information is used to request the terminal device to determine whether the first operation can be performed. The fourth information may be carried in RRC, an MAC CE, or a PDCCH.

If the terminal device is required to perform UL transmission at a measurement occasion, then the terminal device can carry the third information in an MAC CE or a PUCCH. The MAC CE may be a buffer status report (BSR) or a delay status report (DSR). In addition, the MAC CE or the PUCCH further indicates a measurement object associated with the one or more measurement occasions.

For ease of understanding, the following provides a more detailed exemplary illustration of determination of the second condition and a behavior of the terminal device with an example that DL transmission and UL transmission are performed at a measurement occasion, respectively.

### For DL Transmission

Dynamic scheduling: during at least *X* ms/symbols/slots preceding a measurement occasion, if the terminal device determines, based on the second condition mentioned above, that data reception can be performed, then the terminal device sends a UL indication to the network device (via RRC/MAC CE/PUCCH). The determination and the UL indication may be based on a request (RRC/MAC CE/PDCCH) from the network device.

For example, the network device can indicate, in request information (corresponding to the fourth information), information such as a position where DL transmission is desired to be scheduled/a priority of DL transmission. If a position for DL transmission overlaps with a measurement occasion, then the terminal device determines whether the coverage condition information is satisfied. If the coverage condition information is satisfied, then the terminal device further determines whether to perform measurement or data reception based on priority information of data transmission and priority information of the measurement occasion. Exemplarily, respective priority thresholds can be configured for a measurement occasion(s) and data transmission. If a priority of RRM measurement < priority 1, and/or a priority of data transmission > priority 2, then it may be determined that the second condition is satisfied. Alternatively, a priority of a measurement occasion may be directly compared with a priority of data transmission. If a priority of a measurement occasion < the priority of data transmission, then it may be determined that the second condition is satisfied. If there are multiple measurement occasions, then the highest priority among respective priorities corresponding to the multiple measurement occasions may be taken, and then the highest priority is compared with the priority of data transmission.

Non-dynamic scheduling: similar to dynamic scheduling, a difference is that the terminal device can directly determine information, such as a position for DL transmission, based on a semi-static transmission configuration, without relying on a request from the network device. When the second condition is satisfied, the terminal device can indicate to the network device that DL scheduling can be performed, and can further indicate a position/window of a scheduling resource. After receiving the indication from the terminal device, the network device will schedule DL transmission at the corresponding position.

### For UL Transmission

Dynamic scheduling: during at least *X* ms/symbols/slots preceding a measurement occasion, if the terminal device determines, based on the second condition mentioned above, that data reception can be performed, and data is stored in a buffer of the terminal device, then the terminal device can send a UL indication to the network device (via RRC/MAC CE/PUCCH). The determination and the UL indication may be based on the request (RRC/MAC CE/PDCCH) from the network device.

For example, if there is data to be transmitted in the buffer of the terminal device, but the terminal device is required to perform RRM measurement immediately, then the terminal device determines whether the coverage condition information is satisfied. If the coverage condition information is satisfied, then the terminal device further determines whether to perform measurement or data reception based on the priority information of data transmission and the priority information of the measurement occasion. Exemplarily, respective priority thresholds can be configured for a measurement occasion(s) and data transmission. If a priority of RRM measurement < priority 1, and/or a priority of data transmission > priority 2, then it may be determined that the second condition is satisfied. Alternatively, a priority of a measurement occasion may be directly compared with a priority of data transmission. If a priority of a measurement occasion < the priority of data transmission, then it may be determined that the second condition is satisfied. If there are multiple measurement occasions, then the highest priority among respective priorities corresponding to the multiple measurement occasions may be taken, and then the highest priority is compared with the priority of data transmission.

If the terminal device determines that data transmission is to be performed, then the terminal device sends indication information (corresponding to the third information) to the network device. The indication information may be, for example, carried in an enhanced BSR/DSR MAC CE. Exemplarily, an indication of transmission at a measurement occasion may be added in the BSR/DSR MAC CE, and an association relationship between measurement occasions and measurement objects may further be indicated. Alternatively, the indication information may be indicated via new signaling.

Non-dynamic scheduling: similar to dynamic scheduling, a difference is that the terminal device can determine information, such as a position for UL transmission, based on a semi-static transmission configuration, such that corresponding resources are directly used for UL transmission when the second condition is satisfied.

In some embodiments, if the terminal device performs UL transmission at a measurement occasion, then the terminal device can send corresponding UL data according to a scheduling configuration from the network device. For example, the scheduling configuration may include one or more of: a priority configuration for UL transmission scheduled by the network device, a logical channel configuration, a configuration of remaining data delay requirements, etc.

In some embodiments, if the terminal device performs DL transmission at a measurement occasion, then a manner in which the terminal device monitors DL transmission may be determined according to a network implementation.

It may be noted that, an overlap between a measurement occasion and scheduling by the network device may be complete or partial. During determination of whether an overlap exists, in addition to determining whether a measurement occasion overlaps with a slot or a symbol during which scheduling is performed, *M* slots/symbols (where *M* is a positive integer greater than or equal to 1) preceding and/or following the measurement occasion may also be considered (equivalent to considering a processing time of the terminal device).

As mentioned above, whether the terminal device performs the first operation may be controlled by the network device (hereinafter referred to as a first processing mode), or the terminal device may autonomously perform the first operation (hereinafter referred to as a second processing mode). These two processing modes may coexist. That is, these two processing modes can be supported in a communication system. During actual applications, which processing mode is to be used can be flexibly selected according to actual needs. For example, which processing mode is to be used may be controlled by the network device. The network device can comprehensively determine which processing mode is to be used based on whether the network device supports the first processing mode and/or whether the terminal device supports the second processing mode. For another example, the first processing mode may be used for DL transmission, and the second processing mode may be used for UL transmission. For another example, the first processing mode may be used for dynamic scheduling, and the second processing mode may be used for non-dynamic scheduling (CG-based scheduling). For another example, the first processing mode may be used for new data transmission, and the second processing mode may be used for data retransmission.

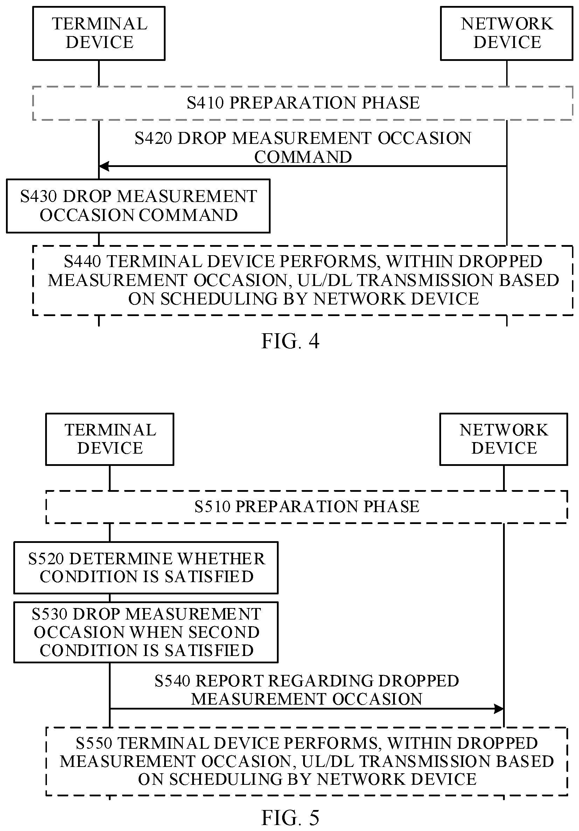

Embodiments of the disclosure are elaborated below with reference to specific examples. It may be noted that, examples as illustrated in FIG. 4 to FIG. 5 are merely intended for helping those skilled in the art understand embodiments of the disclosure rather than limiting embodiments of the disclosure to specific values or specific scenarios illustrated. Those skilled in the art can obviously make various equivalent modifications or variations according to the examples as illustrated in FIG. 4 to FIG. 5, and such modifications or variations also fall within the scope of embodiments of the disclosure.

Reference may be made to FIG. 4. At S410, a preparation phase is illustrated. In the preparation phase, a terminal device and a network device may exchange one or more of capability information, service information, configuration information, measurement reporting information, data status, etc. For detailed illustrations, reference may be made to the foregoing, which are not repeated herein.

At S420, the network device sends a drop measurement occasion command to the terminal device, where the command may be RRC signalling, an MAC CE, or DCI.

At S430, the terminal device drops a measurement occasion(s).

At S440, the terminal device performs, within the dropped measurement occasion(s), UL/DL transmission based on scheduling by the network device.

Reference may be made to FIG. 5. At S510, a preparation phase is illustrated. In the preparation phase, a terminal device and a network device may exchange one or more of capability information, service information, configuration information, measurement reporting information, data status, etc. For detailed illustrations, reference may be made to the foregoing, which are not repeated herein.

At S520, the terminal device determines whether a condition is satisfied, where the condition corresponds to the second condition mentioned above, and for detailed illustrations, reference may be made to the foregoing.

At S530, if the second condition is satisfied, a measurement occasion(s) is dropped.

At S540, the terminal device reports a report regarding a dropped measurement occasion(s) to the network device.

At S550, the terminal device performs, within the dropped measurement occasion(s), UL/DL transmission based on scheduling by the network device.

### Embodiment 2

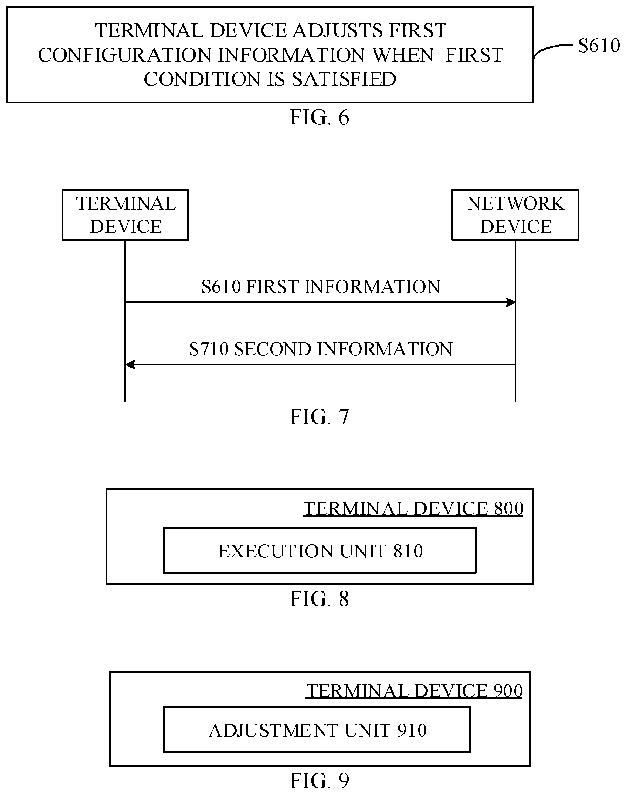

FIG. 6 is a schematic flowchart of a method for wireless communication provided in Embodiment 2 of the disclosure. The method as illustrated in FIG. 2 may be performed by a terminal device, and the terminal device may be, for example, the terminal device 120 mentioned above.

Reference may be made to FIG. 6. At S610, if a first condition is satisfied, then the terminal device adjusts first configuration information (RRM measurement configuration), where the first configuration information is used for RRM measurement. That is, the first configuration information in embodiments of the disclosure does not remain unchanged, but can be flexibly adjusted according to conditions, thereby reducing data transmission interruption by configuring/adjusting RRM measurement-related configurations.

In some embodiments, the first condition is associated with one or more of: a reliability requirement of data to be transmitted, a delay requirement of the data to be transmitted, a remaining delay required for the data to be transmitted, a mobility state of the terminal device, or a position of the terminal device in a serving cell.

The reliability requirement of the data to be transmitted may be, for example, whether there is a requirement for high reliability and/or low delay data (e.g., XR data). If the data to be transmitted has a requirement for high reliability and/or low delay data, then a relatively short measurement occasion (or a relatively short data transmission interruption duration) can be used.

The delay requirement of the data to be transmitted can be used to measure urgency of the data. Exemplarily, if a delay of the data to be transmitted is less than a certain threshold, then the first configuration information can be adjusted. If the urgency of the data to be transmitted is relatively high, a relatively short measurement occasion or a relatively long measurement period (or a relatively short data transmission interruption duration) can be used.

The mobility state of the terminal device can be used to determine whether the terminal device is in a low-mobility state. If the terminal device is in the low-mobility state, then the first configuration information can be adjusted. Whether the terminal device is in the low-mobility state may be determined based on whether changes in measured signal quality of the serving cell and/or a neighbour cell are less than a certain threshold. If the terminal device is in the low-mobility state, then a relatively short measurement occasion (or a relatively short data transmission interruption duration) can be used.

The position of the terminal device in the serving cell may refer to whether the terminal device is at the cell edge. For example, if the terminal device is at the cell edge, then the first configuration information may be adjusted or may not be adjusted. Whether the terminal device is at the cell edge may be determined based on the signal quality of the serving cell, the signal quality of the neighbour cell, and/or a signal quality difference between the serving cell and the neighbour cell. For example, if the signal quality of the serving cell is higher than a certain threshold, then it indicates that the terminal device is not at the cell edge. For another example, if the signal quality of the neighbour cell is lower than a certain threshold, then it indicates that the terminal device is not at the cell edge. For another example, if the signal quality of the serving cell is higher than the signal quality of the neighboring cell by a certain threshold, then it indicates that the terminal device is not at the cell edge. If the terminal device is not at the cell edge, then a measurement occasion with a shorter duration (or a shorter duration for data transmission interruption) can be used.

The adjustment of the first configuration information may be controlled by the network device, or may be performed autonomously by the terminal device. These two implementations are illustrated below.

### Embodiment 2.1: the network device controls the adjustment of the RRM measurement configuration

In Embodiment 2.1, the operations at S610 may include the following. The terminal device sends first information to the network device, where the first information indicates that the first condition is satisfied (or that the first condition has changed). The first information may be carried in RRC, an MAC CE, or a PUCCH.

Reference may be made to S710 in FIG. 7, after receiving the first information, the network device can send second information to the terminal device, where the second information is used to: reconfigure the first configuration information, or indicate that the terminal device is to switch from the first configuration information to second configuration information.

Both the first configuration information and the second configuration information are configuration information used for RRM measurement, and are collectively referred to as RRM measurement configurations. For example, the network device can pre-configure multiple sets of RRM measurement configurations for the terminal device, and switch among different configurations under different conditions (according to reporting from the terminal device).

In some embodiments, the second information may be carried in RRC, an MAC CE, or DCI.

### Embodiment 2.2: the terminal device autonomously adjusts the RRM measurement configuration

In Embodiment 2.2, the operations at S610 may include the following. The terminal device adjusts the first configuration information according to a first parameter, where the first parameter is determined based on configuration information from the network device. For example, the first parameter may be used to relax the RRM measurement configuration (i.e., the first configuration information) by a certain factor/value, for example, to extend a measurement period by a factor of *Y*, or to increase a measurement period by *X* slots, where *X* and/or *Y* mentioned herein may serve as the first parameter. The first parameter may be configured by the network device. The first parameter may be a configuration parameter related to a measurement result/remaining delay. In some embodiments, the first parameter is associated with the measurement result. For example, if the measurement result indicates that the signal quality of the serving cell is higher than threshold interval 1, then a value of the first parameter is value 1. If the measurement result indicates that the signal quality of the serving cell is higher than interval 2, then the value of the first parameter is value 2. In some other embodiments, the first parameter is associated with the remaining delay required for the data to be transmitted. For example, if the remaining delay required for the data to be transmitted belongs to interval 1, then the value of the first parameter is value 1. If the remaining delay required for the data to be transmitted belongs to interval 2, then the value of the first parameter is value 2. Alternatively, in some embodiments, the remaining delay and the measurement result may also be considered jointly.

Alternatively, in Embodiment 2.2, the operations at S610 may include the following. The terminal device autonomously switches from the first configuration information to the second configuration information. Both the first configuration information and the second configuration information are configuration information used for RRM measurement, and are collectively referred to as RRM measurement configurations. For example, the network device can pre-configure multiple sets of RRM measurement configurations for the terminal device, and switch among different configurations under different conditions (according to reporting from the terminal device).

In some embodiments, the multiple sets of RRM measurement configurations may be associated with one or more of: a measurement result of RRM measurement, or a remaining delay required for a data packet to be transmitted.

In some embodiments, if the terminal device adjusts the first configuration information, then the terminal device can send second information to the network device, where the second information indicates an adjusted result of the first configuration information.

The method embodiments of the disclosure are elaborated above with reference to FIG. 1 to FIG. 7, and apparatus embodiments of the disclosure will be elaborated below with reference to FIG. 8 to FIG. 11. It may be understood that, illustrations of method embodiments and illustrations of apparatus embodiments correspond to each other, and therefore, for parts not elaborated, reference can be made to the foregoing method embodiments.

FIG. 8 is a schematic structural diagram of a terminal device provided in embodiments of the disclosure. The terminal device 800 as illustrated in FIG. 8 includes an execution unit 810. The execution unit 810 is configured to perform a first operation, where the first operation includes one or more of: dropping one or more measurement occasions, determining that the one or more measurement occasions share time-domain resources with data transmission, or performing UL/DL data transmission during a period corresponding to the one or more measurement occasions, where the one or more measurement occasions are used for RRM measurement.

In some embodiments, the first operation is triggered based on a first command sent by a network device.

In some embodiments, the first command contains first information, where the first information is used to determine a measurement occasion that is required or allowed to be dropped.

In some embodiments, the first information includes one or more of: the measurement occasion that is required or allowed to be dropped, a priority of a measurement object that is required or allowed to be dropped, or a priority of data to be transmitted.

In some embodiments, the first command is RRC signalling, an MAC CE, or DCI.

In some embodiments, the terminal device further includes a first sending unit. The first sending unit is configured to send second information to the network device before the terminal device performs the first operation, where the second information indicates a request to the network device for performing the first operation.

In some embodiments, the second information is triggered based on a first condition, where the first condition is associated with one or more of: whether the network device supports the terminal device in performing the first operation; a priority of the one or more measurement occasions; a priority of data to be transmitted; a scheduling mode for the data to be transmitted, where the scheduling mode includes CG-based scheduling and/or DG-based scheduling; a priority of scheduling by the network device; a remaining delay required for the data to be transmitted; coverage condition information of the terminal device; a transmission type for the data to be transmitted, where the transmission type includes new transmission and/or retransmission; whether a maximum number of discardable measurement occasions/measurement slots is exceeded; or whether a maximum proportion of discardable measurement occasions/measurement slots is exceeded.

In some embodiments, the one or more measurement occasions are one or more measurement occasions within a first period, where the first period is determined based on one or more of: configuration information from a network device, or a reception time for a first command sent by the network device, where the first command is used to trigger the terminal device to perform the first operation.

In some embodiments, a start time of the first period is determined based on the configuration information from the network device, or the start time of the first period is determined based on the reception time for the first command.

In some embodiments, a duration of the first period is determined based on a timing duration of a first timer, or the duration of the first period is determined based on first duration configuration information from the network device.

In some embodiments, the first operation is determined based on a second condition, where the second condition is associated with one or more of: whether the network device supports the terminal device in performing the first operation; a priority of the one or more measurement occasions; a priority of data to be transmitted; a scheduling mode for the data to be transmitted, where the scheduling mode includes CG-based scheduling and/or DG-based scheduling; a priority of scheduling by the network device; a remaining delay required for the data to be transmitted; coverage condition information of the terminal device; a transmission type for the data to be transmitted, where the transmission type includes new transmission and/or retransmission; whether a maximum number of discardable measurement occasions/measurement slots is exceeded; or whether a maximum proportion of discardable measurement occasions/measurement slots is exceeded.

In some embodiments, the priority of the data to be transmitted is determined based on one or more of: the highest priority of the data to be transmitted, or a priority of a logical channel with the minimum remaining delay.

In some embodiments, the coverage condition information is determined based on one or more of: signal quality of a serving cell, signal quality of a neighbour cell, a change in the signal quality of the serving cell, a change in the signal quality of the neighbour cell, or a signal quality difference between the serving cell and the neighbour cell.

In some embodiments, the terminal device further includes a second sending unit. The second sending unit is configured to send third information to the network device before the terminal device performs the first operation, where the third information indicates that the first terminal device determines to perform the first operation.

In some embodiments, the terminal device further includes a first receiving unit. The first receiving unit is configured to receive fourth information sent by the network device before the terminal device sends the third information to the network device, where the fourth information is used to request the terminal device to determine whether the first operation can be performed.

In some embodiments, in a case where the terminal device performs UL transmission at the one or more measurement occasions, the third information is carried in an MAC CE or a PUCCH.

In some embodiments, the MAC CE or the PUCCH further indicates measurement objects associated with the one or more measurement occasions.

In some embodiments, the MAC CE is a BSR or a DSR.

In some embodiments, the second condition includes one or more of the following: a coverage condition indicated by the coverage condition information satisfies a third condition; the priority of the one or more measurement occasions is lower than or equal to the priority of the data to be transmitted; or the priority of the one or more measurement occasions is lower than or equal to a first priority, and/or the priority of the data to be transmitted is higher than or equal to a second priority.

In some embodiments, the priority of the one or more measurement occasions is determined based on the highest priority among respective priorities corresponding to the one or more measurement occasions.

In some embodiments, the terminal device further includes a second receiving unit. The second receiving unit is configured to receive configuration information from a network device before the terminal device performs the first operation, where the configuration information includes one or more of: first configuration information used to configure the terminal device to perform the first operation; second configuration information related to RRM measurement; third configuration information related to scheduling by the network device; fourth configuration information used to configure a time-domain resource sharing mode between the one or more measurement occasions and data transmission; fifth configuration information related to data status reporting by the terminal device; or sixth configuration information used to configure a maximum number or a maximum proportion of discardable measurement occasions/measurement slots.

In some embodiments, the first configuration information is used to configure one or more of: a first period, where the first period is used for the terminal device to perform the first operation; or a second period, where the second period is used for the terminal device to determine whether to perform the first operation.

In some embodiments, the first configuration information is used to configure one or more of: a start time of the first period, or a duration of the first period.

In some embodiments, the first configuration information is used to configure a first timer, and the duration of the first period is determined based on a timing duration of the first timer.

In some embodiments, the second period includes *X* time units preceding each of the one or more measurement occasions, where the time unit is a slot, a millisecond, or a symbol, and *X* is a positive integer greater than or equal to 1.

In some embodiments, a duration of the second period is associated with one or more of: a measurement object; an FR; or a measurement type, where the measurement type includes an intra-frequency measurement and/or an inter-frequency measurement.

In some embodiments, the second configuration information is used to configure one or more of: whether a measurement object corresponding to RRM measurement supports the terminal device in performing the first operation, a priority of the measurement object corresponding to RRM measurement, or a measurement threshold corresponding to RRM measurement.

In some embodiments, the measurement threshold is associated with one or more of: signal quality of a serving cell, signal quality of a neighbour cell, a signal quality difference between the serving cell and the neighbour cell, a change in the signal quality of the serving cell, or a change in the signal quality of the neighbour cell.

In some embodiments, the terminal device further includes a third sending unit. The third sending unit is configured to send a measurement result to the network device according to the measurement threshold corresponding to RRM measurement.

In some embodiments, the third configuration information is used to configure one or more of: whether scheduling by the network device is allowed within the one or more measurement occasions, or a priority of scheduling by the network device.

In some embodiments, the fifth configuration information is used to configure one or more of: a threshold for a data volume, a threshold for a data priority, or a threshold for a remaining data delay.

In some embodiments, the terminal device further includes a reporting unit. The reporting unit is configured to report a data status to the network device according to the threshold configured by the fifth configuration information.

In some embodiments, the configuration information from the network device is associated with one of: an FR; a measurement type, where the measurement type includes an intra-frequency measurement and/or an inter-frequency measurement; a measurement object; a data priority; a remaining data delay; a data volume; cell information; or a BWP.

In some embodiments, the terminal device further includes a third receiving unit. Before the terminal device performs the first operation, the third receiving unit is configured to receive first capability information sent by a network device, where the first capability information indicates whether the network device supports the terminal device in performing the first operation, and/or send second capability information to the network device, where the second capability information indicates whether the terminal device is capable of performing the first operation.

In some embodiments, the one or more measurement occasions include a first measurement occasion, and the terminal device further includes a determination unit. The determination unit is configured to determine, before the terminal device performs the first operation, whether to perform the first operation within a second period preceding the first measurement occasion.

In some embodiments, the second period includes *X* time units preceding the first measurement occasion, where the time unit is a slot, a millisecond, or a symbol, and *X* is a positive integer greater than or equal to 1.

In some embodiments, the terminal device determines whether to perform the first operation as follows. The terminal device determines to perform the first operation when the network device performs UL/DL scheduling within the first measurement occasion.

In some embodiments, the period corresponding to the one or more measurement occasions includes one or more of: an MG; or a slot or a symbol during which data transmission is interrupted during RRM measurement.

In some embodiments, the period corresponding to the one or more measurement occasions further includes a third period preceding the one or more measurement occasions and/or a fourth period following the one or more measurement occasions.

FIG. 9 is a schematic structural diagram of a terminal device provided in embodiments of the disclosure. The terminal device 900 as illustrated in FIG. 9 includes an adjustment unit 910. The adjustment unit 910 is configured to adjust first configuration information when a first condition is satisfied, where the first configuration information is used for RRM measurement.

In some embodiments, the first condition is associated with one or more of: a reliability requirement of data to be transmitted, a delay requirement of the data to be transmitted, a remaining delay required for the data to be transmitted, a mobility state of the terminal device, or a position of the terminal device in a serving cell.

In some embodiments, the adjustment unit is configured to send first information to a network device, where the first information indicates that the first condition is satisfied.

In some embodiments, the terminal device further includes a receiving unit. The receiving unit is configured to receive second information sent by the network device, where the second information is used to: reconfigure the first configuration information, or indicate that the terminal device is to switch from the first configuration information to second configuration information, where the second configuration information is used for RRM measurement.

In some embodiments, the adjustment unit is configured to adjust the first configuration information according to a first parameter, where the first parameter is determined based on configuration information from the network device.

In some embodiments, a value of the first parameter is associated with one or more of: a measurement result of RRM measurement, or a remaining delay required for a data packet to be transmitted.

In some embodiments, the adjustment unit is configured to switch autonomously from the first configuration information to second configuration information, where the second configuration information is used for RRM measurement.

In some embodiments, the first configuration information and/or the second configuration information is associated with one or more of: a measurement result of RRM measurement, or a remaining delay required for a data packet to be transmitted.

In some embodiments, the terminal device further includes a sending unit. The sending unit is configured to send second information to a network device, where the second information indicates an adjusted result of the first configuration information.

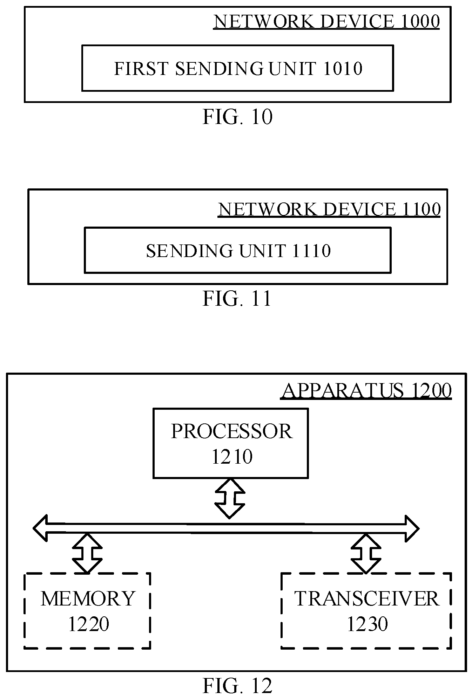

FIG. 10 is a schematic structural diagram of a network device provided in embodiments of the disclosure. The network device 1000 as illustrated in FIG. 10 includes a first sending unit 1010. The first sending unit 1010 is configured to send target information to a terminal device, where the target information is one of: a first command used to trigger the terminal device to perform a first operation, or first configuration information used to configure the terminal device to perform the first operation. The first operation includes one or more of: dropping one or more measurement occasions, determining that the one or more measurement occasions share time-domain resources with data transmission, or performing UL/DL data transmission during a period corresponding to the one or more measurement occasions, where the one or more measurement occasions are used for RRM measurement.

In some embodiments, the first command contains first information, where the first information is used to determine a measurement occasion that is required or allowed to be dropped.

In some embodiments, the first information includes one or more of: the measurement occasion that is required or allowed to be dropped, a priority of a measurement object that is required or allowed to be dropped, or a priority of data to be transmitted.

In some embodiments, the first command is RRC signalling, an MAC CE, or DCI.

In some embodiments, the network device further includes a first receiving unit. The first receiving unit is configured to receive second information sent by the terminal device, where the second information indicates a request to the network device for performing the first operation.

In some embodiments, the one or more measurement occasions are one or more measurement occasions within a first period, where the first period is determined based on one or more of: configuration information from the network device, or a transmission time for the first command.

In some embodiments, a start time of the first period is determined based on the configuration information from the network device, or the start time of the first period is determined based on the reception time for the first command.

In some embodiments, a duration of the first period is determined based on a timing duration of a first timer, or the duration of the first period is determined based on first duration configuration information from the network device.

In some embodiments, the first operation is determined based on a second condition, where the second condition is associated with one or more of: whether the network device supports the terminal device in performing the first operation; a priority of the one or more measurement occasions; a priority of data to be transmitted; a scheduling mode for the data to be transmitted, where the scheduling mode includes CG-based scheduling and/or DG-based scheduling; a priority of scheduling by the network device; a remaining delay required for the data to be transmitted; coverage condition information of the terminal device; a transmission type for the data to be transmitted, where the transmission type includes new transmission and/or retransmission; whether a maximum number of discardable measurement occasions/measurement slots is exceeded; or whether a maximum proportion of discardable measurement occasions/measurement slots is exceeded.

In some embodiments, the priority of the data to be transmitted is determined based on one or more of: the highest priority of the data to be transmitted, or a priority of a logical channel with the minimum remaining delay.

In some embodiments, the coverage condition information is determined based on one or more of: signal quality of a serving cell, signal quality of a neighbour cell, a change in the signal quality of the serving cell, a change in the signal quality of the neighbour cell, or a signal quality difference between the serving cell and the neighbour cell.

In some embodiments, the network device further includes a second receiving unit. The second receiving unit is configured to receive third information sent by the terminal device, where the third information indicates that the first terminal device determines to perform the first operation.

In some embodiments, the network device further includes a second sending unit. The second sending unit is configured to send fourth information to the terminal device before the network device receives the third information sent by the terminal device, where the fourth information is used to request the terminal device to determine whether the first operation can be performed.

In some embodiments, in a case where the terminal device performs UL transmission at the one or more measurement occasions, the third information is carried in an MAC CE or a PUCCH.

In some embodiments, the MAC CE or the PUCCH further indicates measurement objects associated with the one or more measurement occasions.

In some embodiments, the MAC CE is a BSR or a DSR.

In some embodiments, the first configuration information is used to configure one or more of: a first period, where the first period is used for the terminal device to perform the first operation; or a second period, where the second period is used for the terminal device to determine whether to perform the first operation.

In some embodiments, the first configuration information is used to configure one or more of: a start time of the first period, or a duration of the first period.

In some embodiments, the first configuration information is used to configure a first timer, and the duration of the first period is determined based on a timing duration of the first timer.

In some embodiments, the second period includes *X* time units preceding each of the one or more measurement occasions, where the time unit is a slot, a millisecond, or a symbol, and *X* is a positive integer greater than or equal to 1.

In some embodiments, a duration of the second period is associated with one or more of: a measurement object; an FR; or a measurement type, where the measurement type includes an intra-frequency measurement and/or an inter-frequency measurement.

In some embodiments, the network device further includes a third sending unit. The third sending unit is configured to send the terminal device one or more of: second configuration information related to RRM measurement, third configuration information related to scheduling by the network device, fourth configuration information used to configure a time-domain resource sharing mode between the one or more measurement occasions and data transmission, fifth configuration information related to data status reporting by the terminal device, or sixth configuration information used to configure a maximum number or a maximum proportion of discardable measurement occasions/measurement slots.

In some embodiments, the second configuration information is used to configure one or more of: whether a measurement object corresponding to RRM measurement supports the terminal device in performing the first operation, a priority of the measurement object corresponding to RRM measurement, or a measurement threshold corresponding to RRM measurement.

In some embodiments, the measurement threshold is associated with one or more of: signal quality of a serving cell, signal quality of a neighbour cell, a signal quality difference between the serving cell and the neighbour cell, a change in the signal quality of the serving cell, or a change in the signal quality of the neighbour cell.

In some embodiments, the network device further includes a third receiving unit. The third receiving unit is configured to receive a measurement result sent by the terminal device and corresponding to RRM measurement.

In some embodiments, the third configuration information is used to configure one or more of: whether scheduling by the network device is allowed within the one or more measurement occasions, or a priority of scheduling by the network device.

In some embodiments, the fifth configuration information is used to configure one or more of: a threshold for a data volume, a threshold for a data priority, or a threshold for a remaining data delay.

In some embodiments, the network device further includes a fourth receiving unit. The fourth receiving unit is configured to receive a data status reported by the terminal device.

In some embodiments, the configuration information from the network device is associated with one of: an FR; a measurement type, where the measurement type includes an intra-frequency measurement and/or an inter-frequency measurement; a measurement object; a data priority; a remaining data delay; a data volume; cell information; or a BWP.

In some embodiments, the network device further includes a fourth sending unit. The fourth sending unit is configured to send first capability information to the terminal device, where the first capability information indicates whether the network device supports the terminal device in performing the first operation, and/or receive second capability information sent by the terminal device, where the second capability information indicates whether the terminal device is capable of performing the first operation.

In some embodiments, the period corresponding to the one or more measurement occasions includes one or more of: an MG; or a slot or a symbol during which data transmission is interrupted during RRM measurement.

In some embodiments, the period corresponding to the one or more measurement occasions further includes a third period preceding the one or more measurement occasions and/or a fourth period following the one or more measurement occasions.

FIG. 11 is a schematic structural diagram of a network device provided in embodiments of the disclosure. The network device 1100 as illustrated in FIG. 11 includes a sending unit 1110. The sending unit 1110 is configured to send second information to a terminal device, where the second information is used to: reconfigure first configuration information used for RRM measurement, or indicate that the terminal device is to switch from the first configuration information to second configuration information used for RRM measurement.

In some embodiments, the network device further includes a receiving unit. The receiving unit is configured to receive first information sent by the terminal device before the network device sends the second information to the terminal device, where the first information indicates that a first condition is satisfied, and the first condition is associated with one or more of: a reliability requirement of data to be transmitted, a delay requirement of the data to be transmitted, a remaining delay required for the data to be transmitted, a mobility state of the terminal device, or a position of the terminal device in a serving cell.

FIG. 12 is a schematic structural diagram of a communication apparatus to which embodiments of the disclosure are applicable. Dotted lines as illustrated in FIG. 12 indicate that a unit or a module is optional. The apparatus 1200 can be configured to implement the method illustrated in the method embodiments. The apparatus 1200 may be a chip, a terminal device, or a network device.

The apparatus 1200 may include one or more processors 1210. The processor 1210 may support the apparatus 1200 to implement the method illustrated in the method embodiments. The processor 1210 may be a general-purpose processor or a special-purpose processor. For example, the processor may be a central processing unit (CPU). Alternatively, the processor may also be another general-purpose processor, a digital signal processor (DSP), an application-specific integrated circuit (ASIC), a field programmable gate array (FPGA), or other programmable logic devices, discrete gates or transistor logic devices, discrete hardware components, etc. The general-purpose processor may be a microprocessor, the processor may be any conventional processor, etc.

The apparatus 1200 may further include one or more memories 1220. The memory 1220 is configured to store a program which, when executed by the processor 1210, causes the processor 1210 to perform the method as illustrated in the method embodiments. The memory 1220 may be independent of the processor 1210 or may be integrated into the processor 1210.

The apparatus 1200 may further include a transceiver 1230. The processor 1210 may communicate with other devices or chips through the transceiver 1230. For example, the processor 1210 may send data to and receive data from other devices or chips through the transceiver 1230.

A computer-readable storage medium is further provided in embodiments of the disclosure. The computer-readable storage medium is configured to store a program. The computer-readable storage medium is applicable to a first network element, an application function (AF) network element, or a first communication device provided in embodiments of the disclosure. The program is operable with a computer to perform the method performed by the first network element, the AF network element, or the first communication device in various embodiments of the disclosure.

A computer program product is further provided in embodiments of the disclosure. The computer program product includes a program. The computer program product is applicable to the first network element, the AF network element, or the first communication device provided in embodiments of the disclosure. The program is operable with a computer to perform the method performed by the first network element, the AF network element, or the first communication device in various embodiments of the disclosure.

A computer program is further provided in embodiments of the disclosure. The computer program is applicable to the first network element, the AF network element, or the first communication device provided in embodiments of the disclosure. The computer program is operable with a computer to perform the method performed by the first network element, the AF network element, or the first communication device in various embodiments of the disclosure.

It may be understood that, the terms "system" and "network" herein are usually used interchangeably throughout this disclosure. In addition, terms used in the disclosure are merely intended for explaining embodiments of the disclosure rather than limiting the disclosure. The terms "first", "second", "third", "fourth", and the like used in the specification, the claims, and the accompanying drawings of the disclosure are used to distinguish different objects rather than describe a particular order. In addition, the terms "include", "comprise", and "have" as well as variations thereof are intended to cover a non-exclusive inclusion.

In embodiments of the disclosure, "indication" mentioned may be a direct indication, may be an indirect indication, or may mean that there is an association relationship. For example, A indicates B may mean that A directly indicates B, for instance, B can be obtained according to A; may mean that A indirectly indicates B, for instance, A indicates C, and B can be obtained according to C; or may mean that there is an association relationship between A and B.

In embodiments of the disclosure, "B corresponding to A" indicates that B is associated with A, and B may be determined according to A. However, it may be further understood that, "determine B according to A" does not mean that B is determined according to A only, and B may also be determined according to A and/or other information.

In embodiments of the disclosure, the term "correspondence" may mean that there is a direct or indirect correspondence between the two, may mean that there is an association between the two, may mean a relationship of indicating and indicated or configuring and configured, etc.

In embodiments of the disclosure, "pre-defined" or "pre-configured" can be implemented by pre-saving a corresponding code or table in a device (for example, including the terminal device and the network device) or in other manners that can be used for indicating related information, and the disclosure is not limited in this regard. For example, the "pre-defined" may mean defined in a protocol.

In embodiments of the disclosure, the "protocol" may refer to a communication standard protocol, which may include, for example, an LTE protocol, an NR protocol, and a protocol applied to a future communication system, and the disclosure is not limited in this regard.

It may be understood that, the term "and/or" herein only describes an association relationship between associated objects, which means that there can be three relationships. For example, A and/or B can mean A alone, both A and B exist, and B alone. In addition, the character "/" herein generally indicates that the associated objects are in an "or" relationship.

In various embodiments of the disclosure, the magnitude of a sequence number of each of the foregoing processes does not mean an execution order, and an execution order of each process may be determined according to a function and an internal logic of the process, which shall not constitute any limitation to an implementation process of embodiments of the disclosure.

It will be appreciated that, the systems, apparatuses, and methods disclosed in embodiments of the disclosure may also be implemented in various other manners. For example, the above apparatus embodiments are merely illustrative, e.g., the division of units is only a division of logical functions, and other manners of division may be available in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interface, device, or unit, and may be electrical, mechanical, or otherwise.

Separated units as illustrated may or may not be physically separated. Components displayed as units may or may not be physical units, and may reside at one position or may be distributed to multiple networked units. Some or all of the units may be selectively adopted according to practical needs to achieve desired objectives of the disclosure.

In addition, various functional units described in various embodiments of the disclosure may be integrated into one processing unit or may be present as a number of physically separated units, and two or more units may be integrated into one.

All or some of the above embodiments can be implemented through software, hardware, firmware, or any other combination thereof. When implemented by software, all or some of the above embodiments can be implemented in the form of a computer program product. The computer program product includes one or more computer instructions. When the computer instructions are applied and executed on a computer, all or some of the operations or functions of embodiments of the disclosure are performed. The computer may be a general-purpose computer, a special-purpose computer, a computer network, or other programmable apparatus. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center in a wired manner or in a wireless manner. Examples of the wired manner may be a coaxial cable, an optical fiber, a digital subscriber line (DSL), etc. The wireless manner may be, for example, infrared, wireless, microwave, etc. The computer-readable storage medium may be any computer-accessible usable medium or a data storage device, such as a server, a data center, etc., that integrates one or more usable media. The usable medium may be a magnetic medium (such as a soft disk, a hard disk, or a magnetic tape), an optical medium (such as a digital video disc (DVD)), a semiconductor medium (such as a solid state disk (SSD)), etc.

The foregoing elaborations are merely embodiments of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A method for wireless communication, comprising:
performing, by a terminal device, a first operation, wherein the first operation comprises one or more of:
dropping one or more measurement occasions;
determining that the one or more measurement occasions share time-domain resources with data transmission; or
performing uplink (UL)/downlink (DL) data transmission during a period corresponding to the one or more measurement occasions;
wherein the one or more measurement occasions are used for radio resource management (RRM) measurement.

2. The method of claim 1, wherein the first operation is triggered based on a first command sent by a network device.

3. The method of claim 2, wherein the first command contains first information, wherein the first information is used to determine a measurement occasion that is required or allowed to be dropped.

4. The method of claim 3, wherein the first information comprises one or more of:
the measurement occasion that is required or allowed to be dropped;
a priority of a measurement object that is required or allowed to be dropped; or
a priority of data to be transmitted.

5. The method of any one of claims 2 to 4, wherein the first command is radio resource control (RRC) signalling, a medium access control (MAC) control element (CE), or downlink control information (DCI).

6. The method of any one of claims 2 to 5, wherein before performing, by the terminal device, the first operation, the method further comprises:
sending, by the terminal device, second information to the network device, wherein the second information indicates a request to the network device for performing the first operation.

7. The method of claim 6, wherein the second information is triggered based on a first condition, wherein the first condition is associated with one or more of:
whether the network device supports the terminal device in performing the first operation;
a priority of the one or more measurement occasions;
a priority of data to be transmitted;
a scheduling mode for the data to be transmitted, wherein the scheduling mode comprises configured grant (CG)-based scheduling and/or dynamic grant (DG)-based scheduling;
a priority of scheduling by the network device;
a remaining delay required for the data to be transmitted;
coverage condition information of the terminal device;
a transmission type for the data to be transmitted, wherein the transmission type comprises new transmission and/or retransmission;
whether a maximum number of discardable measurement occasions/measurement slots is exceeded; or
whether a maximum proportion of discardable measurement occasions/measurement slots is exceeded.

8. The method of any one of claims 1 to 7, wherein the one or more measurement occasions are one or more measurement occasions within a first period, wherein the first period is determined based on one or more of:
configuration information from a network device; or
a reception time for a first command sent by the network device;
wherein the first command is used to trigger the terminal device to perform the first operation.

9. The method of claim 8, wherein a start time of the first period is determined based on the configuration information from the network device, or the start time of the first period is determined based on the reception time for the first command.

10. The method of claim 8 or 9, wherein a duration of the first period is determined based on a timing duration of a first timer, or the duration of the first period is determined based on first duration configuration information from the network device.

11. The method of claim 1, wherein the first operation is determined based on a second condition, wherein the second condition is associated with one or more of:
whether a network device supports the terminal device in performing the first operation;
a priority of the one or more measurement occasions;
a priority of data to be transmitted;
a scheduling mode for the data to be transmitted, wherein the scheduling mode comprises CG-based scheduling and/or DG-based scheduling;
a priority of scheduling by the network device;
a remaining delay required for the data to be transmitted;
coverage condition information of the terminal device;
a transmission type for the data to be transmitted, wherein the transmission type comprises new transmission and/or retransmission;
whether a maximum number of discardable measurement occasions/measurement slots is exceeded; or
whether a maximum proportion of discardable measurement occasions/measurement slots is exceeded.

12. The method of claim 7 or 11, wherein the priority of the data to be transmitted is determined based on one or more of:
a highest priority of the data to be transmitted; or
a priority of a logical channel with a minimum remaining delay.

13. The method of claim 7, 11, or 12, wherein the coverage condition information is determined based on one or more of:
signal quality of a serving cell;
signal quality of a neighbour cell;
a change in the signal quality of the serving cell;
a change in the signal quality of the neighbour cell; or
a signal quality difference between the serving cell and the neighbour cell.

14. The method of any one of claims 11 to 13, wherein before performing, by the terminal device, the first operation, the method further comprises:
sending, by the terminal device, third information to the network device, wherein the third information indicates that the first terminal device determines to perform the first operation.

15. The method of claim 14, wherein before sending, by the terminal device, the third information to the network device, the method further comprises:
receiving, by the terminal device, fourth information sent by the network device, wherein the fourth information is used to request the terminal device to determine whether the first operation can be performed.

16. The method of claim 14 or 15, wherein in a case where the terminal device performs UL transmission at the one or more measurement occasions, the third information is carried in an MAC CE or a physical uplink control channel (PUCCH).

17. The method of claim 16, wherein the MAC CE or the PUCCH further indicates measurement objects associated with the one or more measurement occasions.

18. The method of claim 16 or 17, wherein the MAC CE is a buffer status report (BSR) or a delay status report (DSR).

19. The method of any one of claims 11 to 18, wherein the second condition comprises one or more of the following:
a coverage condition indicated by the coverage condition information satisfies a third condition;
the priority of the one or more measurement occasions is lower than or equal to the priority of the data to be transmitted; or
the priority of the one or more measurement occasions is lower than or equal to a first priority, and/or the priority of the data to be transmitted is higher than or equal to a second priority.

20. The method of claim 19, wherein the priority of the one or more measurement occasions is determined based on a highest priority among respective priorities corresponding to the one or more measurement occasions.

21. The method of any one of claims 1 to 20, wherein before performing, by the terminal device, the first operation, the method further comprises:
receiving, by the terminal device, configuration information from a network device, wherein the configuration information comprises one or more of:
first configuration information used to configure the terminal device to perform the first operation;
second configuration information related to the RRM measurement;
third configuration information related to scheduling by the network device;
fourth configuration information used to configure a time-domain resource sharing mode between the one or more measurement occasions and data transmission;
fifth configuration information related to data status reporting by the terminal device; or
sixth configuration information used to configure a maximum number or a maximum proportion of discardable measurement occasions/measurement slots.

22. The method of claim 21, wherein the first configuration information is used to configure one or more of:
a first period, wherein the first period is used for the terminal device to perform the first operation; or
a second period, wherein the second period is used for the terminal device to determine whether to perform the first operation.

23. The method of claim 22, wherein the first configuration information is used to configure one or more of:
a start time of the first period; or
a duration of the first period.

24. The method of claim 23, wherein the first configuration information is used to configure a first timer, and the duration of the first period is determined based on a timing duration of the first timer.

25. The method of any one of claims 22 to 24, wherein the second period comprises *X* time units preceding each of the one or more measurement occasions, wherein the time unit is a slot, a millisecond, or a symbol, and *X* is a positive integer greater than or equal to 1.

26. The method of any one of claims 22 to 25, wherein a duration of the second period is associated with one or more of:
a measurement object;
a frequency range (FR); or
a measurement type, wherein the measurement type comprises an intra-frequency measurement and/or an inter-frequency measurement.

27. The method of any one of claims 21 to 26, wherein the second configuration information is used to configure one or more of:
whether a measurement object corresponding to the RRM measurement supports the terminal device in performing the first operation;
a priority of the measurement object corresponding to the RRM measurement; or
a measurement threshold corresponding to the RRM measurement.

28. The method of claim 27, wherein the measurement threshold is associated with one or more of:
signal quality of a serving cell;
signal quality of a neighbour cell;
a signal quality difference between the serving cell and the neighbour cell;
a change in the signal quality of the serving cell; or
a change in the signal quality of the neighbour cell.

29. The method of claim 27 or 28, further comprising:
sending, by the terminal device, a measurement result to the network device according to the measurement threshold corresponding to the RRM measurement.

30. The method of any one of claims 21 to 29, wherein the third configuration information is used to configure one or more of:
whether scheduling by the network device is allowed within the one or more measurement occasions; or
a priority of scheduling by the network device.

31. The method of any one of claims 21 to 30, wherein the fifth configuration information is used to configure one or more of:
a threshold for a data volume;
a threshold for a data priority; or
a threshold for a remaining data delay.

32. The method of claim 31, further comprising:
reporting, by the terminal device, a data status to the network device according to the threshold configured by the fifth configuration information.

33. The method of any one of claims 21 to 32, wherein the configuration information from the network device is associated with one of:
an FR;
a measurement type, wherein the measurement type comprises an intra-frequency measurement and/or an inter-frequency measurement;
a measurement object;
a data priority;
a remaining data delay;
a data volume;
cell information; or
a bandwidth part (BWP).

34. The method of any one of claims 1 to 33, wherein before performing, by the terminal device, the first operation, the method further comprises:
receiving, by the terminal device, first capability information sent by a network device, wherein the first capability information indicates whether the network device supports the terminal device in performing the first operation; and/or
sending, by the terminal device, second capability information to the network device, wherein the second capability information indicates whether the terminal device is capable of performing the first operation.

35. The method of any one of claims 1 to 34, wherein the one or more measurement occasions comprise a first measurement occasion, and before performing, by the terminal device, the first operation, the method further comprises:
determining, by the terminal device, whether to perform the first operation within a second period preceding the first measurement occasion.

36. The method of claim 35, wherein the second period comprises *X* time units preceding the first measurement occasion, wherein the time unit is a slot, a millisecond, or a symbol, and *X* is a positive integer greater than or equal to 1.

37. The method of claim 35 or 36, wherein determining, by the terminal device, whether to perform the first operation comprises:
determining, by the terminal device, to perform the first operation in response to a network device performing UL/DL scheduling within the first measurement occasion.

38. The method of any one of claims 1 to 37, wherein the period corresponding to the one or more measurement occasions comprises one or more of:
a measurement gap (MG); or
a slot or a symbol during which data transmission is interrupted during the RRM measurement.

39. The method of claim 38, wherein the period corresponding to the one or more measurement occasions further comprises a third period preceding the one or more measurement occasions and/or a fourth period following the one or more measurement occasions.

40. A method for wireless communication, comprising:
adjusting, by a terminal device, first configuration information in response to a first condition being satisfied, wherein the first configuration information is used for radio resource management (RRM) measurement.

41. The method of claim 40, wherein the first condition is associated with one or more of:
a reliability requirement of data to be transmitted;
a delay requirement of the data to be transmitted;
a remaining delay required for the data to be transmitted;
a mobility state of the terminal device; or
a position of the terminal device in a serving cell.

42. The method of claim 40 or 41, wherein adjusting, by the terminal device, the first configuration information comprises:
sending, by the terminal device, first information to a network device, wherein the first information indicates that the first condition is satisfied.

43. The method of claim 42, further comprising:
receiving, by the terminal device, second information sent by the network device, wherein the second information is used to:
reconfigure the first configuration information; or
indicate that the terminal device is to switch from the first configuration information to second configuration information, wherein the second configuration information is used for RRM measurement.

44. The method of claim 40 or 41, wherein adjusting, by the terminal device, the first configuration information comprises:
adjusting, by the terminal device, the first configuration information according to a first parameter, wherein the first parameter is determined based on configuration information from a network device.

45. The method of claim 44, wherein a value of the first parameter is associated with one or more of:
a measurement result of the RRM measurement; or
a remaining delay required for a data packet to be transmitted.

46. The method of claim 40 or 41, wherein adjusting, by the terminal device, the first configuration information comprises:
switching autonomously, by the terminal device, from the first configuration information to second configuration information, wherein the second configuration information is used for RRM measurement.

47. The method of claim 46, wherein the first configuration information and/or the second configuration information is associated with one or more of:
a measurement result of the RRM measurement; or
a remaining delay required for a data packet to be transmitted.

48. The method of any one of claims 44 to 47, further comprising:
sending, by the terminal device, second information to a network device, wherein the second information indicates an adjusted result of the first configuration information.

49. A method for wireless communication, comprising:
sending, by a network device, target information to a terminal device, wherein the target information is one of:
a first command used to trigger the terminal device to perform a first operation; or
first configuration information used to configure the terminal device to perform the first operation;
wherein the first operation comprises one or more of:
dropping one or more measurement occasions;
determining that the one or more measurement occasions share time-domain resources with data transmission; or
performing uplink (UL)/downlink (DL) data transmission during a period corresponding to one or more measurement occasions;
wherein the one or more measurement occasions are used for radio resource management (RRM) measurement.

50. The method of claim 49, wherein the first command comprises first information, wherein the first information is used to determine a measurement occasion that is required or allowed to be dropped.

51. The method of claim 50, wherein the first information comprises one or more of:
the measurement occasion that is required or allowed to be dropped;
a priority of a measurement object that is required or allowed to be dropped; or
a priority of data to be transmitted.

52. The method of claim 50 or 51, wherein the first command is radio resource control (RRC) signalling, a medium access control (MAC) control element (CE), or downlink control information (DCI).

53. The method of any one of claims 50 to 52, further comprising:
receiving, by the network device, second information sent by the terminal device, wherein the second information indicates a request to the network device for performing the first operation.

54. The method of any one of claims 49 to 53, wherein the one or more measurement occasions are one or more measurement occasions within a first period, wherein the first period is determined based on one or more of:
configuration information from the network device; or
a transmission time for the first command.

55. The method of claim 54, wherein a start time of the first period is determined based on the configuration information from the network device, or the start time of the first period is determined based on a reception time for the first command.

56. The method of claim 54 or 55, wherein a duration of the first period is determined based on a timing duration of a first timer, or the duration of the first period is determined based on first duration configuration information from the network device.

57. The method of claim 49, wherein the first operation is determined based on a second condition, wherein the second condition is associated with one or more of:
whether a network device supports the terminal device in performing the first operation;
a priority of the one or more measurement occasions;
a priority of data to be transmitted;
a scheduling mode for the data to be transmitted, wherein the scheduling mode comprises CG-based scheduling and/or DG-based scheduling;
a priority of scheduling by the network device;
a remaining delay required for the data to be transmitted;
coverage condition information of the terminal device;
a transmission type for the data to be transmitted, wherein the transmission type comprises new transmission and/or retransmission;
whether a maximum number of discardable measurement occasions/measurement slots is exceeded; or
whether a maximum proportion of discardable measurement occasions/measurement slots is exceeded.

58. The method of claim 57, wherein the priority of the data to be transmitted is determined based on one or more of:
a highest priority of the data to be transmitted; or
a priority of a logical channel with a minimum remaining delay.

59. The method of claim 57 or 58, wherein the coverage condition information is determined based on one or more of:
signal quality of a serving cell;
signal quality of a neighbour cell;
a change in the signal quality of the serving cell;
a change in the signal quality of the neighbour cell; or
a signal quality difference between the serving cell and the neighbour cell.

60. The method of any one of claims 57 to 59, further comprising:
receiving, by the network device, third information sent by the terminal device, wherein the third information indicates that the first terminal device determines to perform the first operation.

61. The method of claim 60, wherein before receiving, by the network device, the third information sent by the terminal device, the method further comprises:
sending, by the network device, fourth information to the terminal device, wherein the fourth information is used to request the terminal device to determine whether the first operation can be performed.

62. The method of claim 60 or 61, wherein in a case where the terminal device performs UL transmission at the one or more measurement occasions, the third information is carried in an MAC CE or a physical uplink control channel (PUCCH).

63. The method of claim 62, wherein the MAC CE or the PUCCH further indicates measurement objects associated with the one or more measurement occasions.

64. The method of claim 62 or 63, wherein the MAC CE is a buffer status report (BSR) or a delay status report (DSR).

65. The method of any one of claims 49 to 64, wherein the first configuration information is used to configure one or more of:
a first period, wherein the first period is used for the terminal device to perform the first operation; or
a second period, wherein the second period is used for the terminal device to determine whether to perform the first operation.

66. The method of claim 65, wherein the first configuration information is used to configure one or more of:
a start time of the first period; or
a duration of the first period.

67. The method of claim 66, wherein the first configuration information is used to configure a first timer, and the duration of the first period is determined based on a timing duration of the first timer.

68. The method of any one of claims 65 to 67, wherein the second period comprises *X* time units preceding each of the one or more measurement occasions, wherein the time unit is a slot, a millisecond, or a symbol, and *X* is a positive integer greater than or equal to 1.

69. The method of any one of claims 65 to 68, wherein a duration of the second period is associated with one or more of:
a measurement object;
a frequency range (FR); or
a measurement type, wherein the measurement type comprises an intra-frequency measurement and/or an inter-frequency measurement.

70. The method of any one of claims 49 to 69, further comprising:
sending, by the network device, the terminal device one or more of:
second configuration information related to the RRM measurement;
third configuration information related to scheduling by the network device;
fourth configuration information used to configure a time-domain resource sharing mode between the one or more measurement occasions and data transmission;
fifth configuration information related to data status reporting by the terminal device; or
sixth configuration information used to configure a maximum number or a maximum proportion of discardable measurement occasions/measurement slots.

71. The method of claim 70, wherein the second configuration information is used to configure one or more of:
whether a measurement object corresponding to the RRM measurement supports the terminal device in performing the first operation;
a priority of the measurement object corresponding to the RRM measurement; or
a measurement threshold corresponding to the RRM measurement.

72. The method of claim 71, wherein the measurement threshold is associated with one or more of:
signal quality of a serving cell;
signal quality of a neighbour cell;
a signal quality difference between the serving cell and the neighbour cell;
a change in the signal quality of the serving cell; or
a change in the signal quality of the neighbour cell.

73. The method of any one of claims 70 to 72, further comprising:
receiving, by the network device, a measurement result sent by the terminal device and corresponding to the RRM measurement.

74. The method of any one of claims 70 to 73, wherein the third configuration information is used to configure one or more of:
whether scheduling by the network device is allowed within the one or more measurement occasions; or
a priority of scheduling by the network device.

75. The method of any one of claims 70 to 74, wherein the fifth configuration information is used to configure one or more of:
a threshold for a data volume;
a threshold for a data priority; or
a threshold for a remaining data delay.

76. The method of any one of claims 70 to 75, further comprising:
receiving, by the network device, a data status reported by the terminal device.

77. The method of any one of claims 49 to 76, wherein the configuration information from the network device is associated with one of:
an FR;
a measurement type, wherein the measurement type comprises an intra-frequency measurement and/or an inter-frequency measurement;
a measurement object;
a data priority;
a remaining data delay;
a data volume;
cell information; or
a bandwidth part (BWP).

78. The method of any one of claims 49 to 77, further comprising:
sending, by the network device, first capability information to the terminal device, wherein the first capability information indicates whether the network device supports the terminal device in performing the first operation; and/or
receiving, by the network device, second capability information sent by the terminal device, wherein the second capability information indicates whether the terminal device is capable of performing the first operation.

79. The method of any one of claims 49 to 78, wherein the period corresponding to the one or more measurement occasions comprises one or more of:
a measurement gap (MG); or
a slot or a symbol during which data transmission is interrupted during the RRM measurement.

80. The method of claim 79, wherein the period corresponding to the one or more measurement occasions further comprises a third period preceding the one or more measurement occasions and/or a fourth period following the one or more measurement occasions.

81. A method for wireless communication, comprising:
sending, by a network device, second information to a terminal device, wherein the second information is used to:
reconfigure first configuration information used for radio resource management (RRM) measurement; or
indicate that the terminal device is to switch from the first configuration information to second configuration information used for RRM measurement.

82. The method of claim 81, wherein before sending, by the network device, the second information to the terminal device, the method further comprises:
receiving, by the network device, first information sent by the terminal device, wherein the first information indicates that a first condition is satisfied, and the first condition is associated with one or more of:
a reliability requirement of data to be transmitted;
a delay requirement of the data to be transmitted;
a remaining delay required for the data to be transmitted;
a mobility state of the terminal device; or
a position of the terminal device in a serving cell.

83. A terminal device, comprising:
an execution unit configured to perform a first operation, wherein the first operation comprises one or more of:
dropping one or more measurement occasions;
determining that the one or more measurement occasions share time-domain resources with data transmission; or
performing uplink (UL)/downlink (DL) data transmission during a period corresponding to the one or more measurement occasions;
wherein the one or more measurement occasions are used for radio resource management (RRM) measurement.

84. The terminal device of claim 83, wherein the first operation is triggered based on a first command sent by a network device.

85. The terminal device of claim 84, wherein the first command contains first information, wherein the first information is used to determine a measurement occasion that is required or allowed to be dropped.

86. The terminal device of claim 85, wherein the first information comprises one or more of:
the measurement occasion that is required or allowed to be dropped;
a priority of a measurement object that is required or allowed to be dropped; or
a priority of data to be transmitted.

87. The terminal device of any one of claims 84 to 86, wherein the first command is radio resource control (RRC) signalling, a medium access control (MAC) control element (CE), or downlink control information (DCI).

88. The terminal device of any one of claims 84 to 87, further comprising:
a first sending unit configured to send second information to the network device before the terminal device performs the first operation, wherein the second information indicates a request to the network device for performing the first operation.

89. The terminal device of claim 88, wherein the second information is triggered based on a first condition, wherein the first condition is associated with one or more of:
whether the network device supports the terminal device in performing the first operation;
a priority of the one or more measurement occasions;
a priority of data to be transmitted;
a scheduling mode for the data to be transmitted, wherein the scheduling mode comprises configured grant (CG)-based scheduling and/or dynamic grant (DG)-based scheduling;
a priority of scheduling by the network device;
a remaining delay required for the data to be transmitted;
coverage condition information of the terminal device;
a transmission type for the data to be transmitted, wherein the transmission type comprises new transmission and/or retransmission;
whether a maximum number of discardable measurement occasions/measurement slots is exceeded; or
whether a maximum proportion of discardable measurement occasions/measurement slots is exceeded.

90. The terminal device of any one of claims 83 to 89, wherein the one or more measurement occasions are one or more measurement occasions within a first period, wherein the first period is determined based on one or more of:
configuration information from a network device; or
a reception time for a first command sent by the network device;
wherein the first command is used to trigger the terminal device to perform the first operation.

91. The terminal device of claim 90, wherein a start time of the first period is determined based on the configuration information from the network device, or the start time of the first period is determined based on the reception time for the first command.

92. The terminal device of claim 90 or 91, wherein a duration of the first period is determined based on a timing duration of a first timer, or the duration of the first period is determined based on first duration configuration information from the network device.

93. The terminal device of claim 83, wherein the first operation is determined based on a second condition, wherein the second condition is associated with one or more of:
whether a network device supports the terminal device in performing the first operation;
a priority of the one or more measurement occasions;
a priority of data to be transmitted;
a scheduling mode for the data to be transmitted, wherein the scheduling mode comprises CG-based scheduling and/or DG-based scheduling;
a priority of scheduling by the network device;
a remaining delay required for the data to be transmitted;
coverage condition information of the terminal device;
a transmission type for the data to be transmitted, wherein the transmission type comprises new transmission and/or retransmission;
whether a maximum number of discardable measurement occasions/measurement slots is exceeded; or
whether a maximum proportion of discardable measurement occasions/measurement slots is exceeded.

94. The terminal device of claim 89 or 93, wherein the priority of the data to be transmitted is determined based on one or more of:
a highest priority of the data to be transmitted; or
a priority of a logical channel with a minimum remaining delay.

95. The terminal device of claim 89, 93, or 94, wherein the coverage condition information is determined based on one or more of:
signal quality of a serving cell;
signal quality of a neighbour cell;
a change in the signal quality of the serving cell;
a change in the signal quality of the neighbour cell; or
a signal quality difference between the serving cell and the neighbour cell.

96. The terminal device of any one of claims 93 to 95, further comprising:
a second sending unit configured to send third information to the network device before the terminal device performs the first operation, wherein the third information indicates that the first terminal device determines to perform the first operation.

97. The terminal device of claim 96, further comprising:
a first receiving unit configured to receive fourth information sent by the network device before the terminal device sends the third information to the network device, wherein the fourth information is used to request the terminal device to determine whether the first operation can be performed.

98. The terminal device of claim 96 or 97, wherein in a case where the terminal device performs UL transmission at the one or more measurement occasions, the third information is carried in an MAC CE or a physical uplink control channel (PUCCH).

99. The terminal device of claim 98, wherein the MAC CE or the PUCCH further indicates measurement objects associated with the one or more measurement occasions.

100. The terminal device of claim 98 or 99, wherein the MAC CE is a buffer status report (BSR) or a delay status report (DSR).

101. The terminal device of any one of claims 93 to 100, wherein the second condition comprises one or more of the following:
a coverage condition indicated by the coverage condition information satisfies a third condition;
the priority of the one or more measurement occasions is lower than or equal to the priority of the data to be transmitted; or
the priority of the one or more measurement occasions is lower than or equal to a first priority, and/or the priority of the data to be transmitted is higher than or equal to a second priority.

102. The terminal device of claim 101, wherein the priority of the one or more measurement occasions is determined based on a highest priority among respective priorities corresponding to the one or more measurement occasions.

103. The terminal device of any one of claims 83 to 102, further comprising:
a second receiving unit configured to receive configuration information from a network device before the terminal device performs the first operation, wherein the configuration information comprises one or more of:
first configuration information used to configure the terminal device to perform the first operation;
second configuration information related to the RRM measurement;
third configuration information related to scheduling by the network device;
fourth configuration information used to configure a time-domain resource sharing mode between the one or more measurement occasions and data transmission;
fifth configuration information related to data status reporting by the terminal device; or
sixth configuration information used to configure a maximum number or a maximum proportion of discardable measurement occasions/measurement slots.

104. The terminal device of claim 103, wherein the first configuration information is used to configure one or more of:
a first period, wherein the first period is used for the terminal device to perform the first operation; or
a second period, wherein the second period is used for the terminal device to determine whether to perform the first operation.

105. The terminal device of claim 104, wherein the first configuration information is used to configure one or more of:
a start time of the first period; or
a duration of the first period.

106. The terminal device of claim 105, wherein the first configuration information is used to configure a first timer, and the duration of the first period is determined based on a timing duration of the first timer.

107. The terminal device of any one of claims 104 to 106, wherein the second period comprises *X* time units preceding each of the one or more measurement occasions, wherein the time unit is a slot, a millisecond, or a symbol, and *X* is a positive integer greater than or equal to 1.

108. The terminal device of any one of claims 104 to 107, wherein a duration of the second period is associated with one or more of:
a measurement object;
a frequency range (FR); or
a measurement type, wherein the measurement type comprises an intra-frequency measurement and/or an inter-frequency measurement.

109. The terminal device of any one of claims 103 to 108, wherein the second configuration information is used to configure one or more of:
whether a measurement object corresponding to the RRM measurement supports the terminal device in performing the first operation;
a priority of the measurement object corresponding to the RRM measurement; or
a measurement threshold corresponding to the RRM measurement.

110. The terminal device of claim 109, wherein the measurement threshold is associated with one or more of:
signal quality of a serving cell;
signal quality of a neighbour cell;
a signal quality difference between the serving cell and the neighbour cell;
a change in the signal quality of the serving cell; or
a change in the signal quality of the neighbour cell.

111. The terminal device of claim 109 or 110, further comprising:
a third sending unit configured to send a measurement result to the network device according to the measurement threshold corresponding to the RRM measurement.

112. The terminal device of any one of claims 103 to 111, wherein the third configuration information is used to configure one or more of:
whether scheduling by the network device is allowed within the one or more measurement occasions; or
a priority of scheduling by the network device.

113. The terminal device of any one of claims 103 to 112, wherein the fifth configuration information is used to configure one or more of:
a threshold for a data volume;
a threshold for a data priority; or
a threshold for a remaining data delay.

114. The terminal device of claim 113, further comprising:
a reporting unit configured to report a data status to the network device according to the threshold configured by the fifth configuration information.

115. The terminal device of any one of claims 103 to 114, wherein the configuration information from the network device is associated with one of:
an FR;
a measurement type, wherein the measurement type comprises an intra-frequency measurement and/or an inter-frequency measurement;
a measurement object;
a data priority;
a remaining data delay;
a data volume;
cell information; or
a bandwidth part (BWP).

116. The terminal device of any one of claims 83 to 115, further comprising:
a third receiving unit, before the terminal device performs the first operation, configured to:
receive first capability information sent by a network device, wherein the first capability information indicates whether the network device supports the terminal device in performing the first operation; and/or
send second capability information to the network device, wherein the second capability information indicates whether the terminal device is capable of performing the first operation.

117. The terminal device of any one of claims 83 to 116, wherein the one or more measurement occasions comprise a first measurement occasion, and the terminal device further comprises:
a determination unit configured to determine, before the terminal device performs the first operation, whether to perform the first operation within a second period preceding the first measurement occasion.

118. The terminal device of claim 117, wherein the second period comprises *X* time units preceding the first measurement occasion, wherein the time unit is a slot, a millisecond, or a symbol, and *X* is a positive integer greater than or equal to 1.

119. The terminal device of claim 117 or 118, wherein determining, by the terminal device, whether to perform the first operation comprises:
determining, by the terminal device, to perform the first operation in response to a network device performing UL/DL scheduling within the first measurement occasion.

120. The terminal device of any one of claims 83 to 119, wherein the period corresponding to the one or more measurement occasions comprises one or more of:
a measurement gap (MG); or
a slot or a symbol during which data transmission is interrupted during the RRM measurement.

121. The terminal device of claim 120, wherein the period corresponding to the one or more measurement occasions further comprises a third period preceding the one or more measurement occasions and/or a fourth period following the one or more measurement occasions.

122. A terminal device, comprising:
an adjustment unit configured to adjust first configuration information in response to a first condition being satisfied, wherein the first configuration information is used for radio resource management (RRM) measurement.

123. The terminal device of claim 122, wherein the first condition is associated with one or more of:
a reliability requirement of data to be transmitted;
a delay requirement of the data to be transmitted;
a remaining delay required for the data to be transmitted;
a mobility state of the terminal device; or
a position of the terminal device in a serving cell.

124. The terminal device of claim 122 or 123, wherein the adjustment unit is configured to:
send first information to a network device, wherein the first information indicates that the first condition is satisfied.

125. The terminal device of claim 124, further comprising:
a receiving unit configured to receive second information sent by the network device, wherein the second information is used to:
reconfigure the first configuration information; or
indicate that the terminal device is to switch from the first configuration information to second configuration information, wherein the second configuration information is used for RRM measurement.

126. The terminal device of claim 122 or 123, wherein the adjustment unit is configured to:
adjust the first configuration information according to a first parameter, wherein the first parameter is determined based on configuration information from a network device.

127. The terminal device of claim 126, wherein a value of the first parameter is associated with one or more of:
a measurement result of the RRM measurement; or
a remaining delay required for a data packet to be transmitted.

128. The terminal device of claim 122 or 123, wherein the adjustment unit is configured to:
switch autonomously from the first configuration information to second configuration information, wherein the second configuration information is used for RRM measurement.

129. The terminal device of claim 128, wherein the first configuration information and/or the second configuration information is associated with one or more of:
a measurement result of the RRM measurement; or
a remaining delay required for a data packet to be transmitted.

130. The terminal device of any one of claims 126 to 129, further comprising:
a sending unit configured to send second information to a network device, wherein the second information indicates an adjusted result of the first configuration information.

131. A network device, comprising:
a first sending unit configured to send target information to a terminal device, wherein the target information is one of:
a first command used to trigger the terminal device to perform a first operation; or
first configuration information used to configure the terminal device to perform the first operation;
wherein the first operation comprises one or more of:
dropping one or more measurement occasions;
determining that the one or more measurement occasions share time-domain resources with data transmission; or
performing uplink (UL)/downlink (DL) data transmission during a period corresponding to the one or more measurement occasions;
wherein the one or more measurement occasions are used for radio resource management (RRM) measurement.

132. The network device of claim 131, wherein the first command comprises first information, wherein the first information is used to determine a measurement occasion that is required or allowed to be dropped.

133. The network device of claim 132, wherein the first information comprises one or more of:
the measurement occasion that is required or allowed to be dropped;
a priority of a measurement object that is required or allowed to be dropped; or
a priority of data to be transmitted.

134. The network device of claim 132 or 133, wherein the first command is radio resource control (RRC) signalling, a medium access control (MAC) control element (CE), or downlink control information (DCI).

135. The network device of any one of claims 132 to 134, further comprising:
a first receiving unit configured to receive second information sent by the terminal device, wherein the second information indicates a request to the network device for performing the first operation.

136. The network device of any one of claims 131 to 135, wherein the one or more measurement occasions are one or more measurement occasions within a first period, wherein the first period is determined based on one or more of:
configuration information from the network device; or
a transmission time for the first command.

137. The network device of claim 136, wherein a start time of the first period is determined based on the configuration information from the network device, or the start time of the first period is determined based on a reception time for the first command.

138. The network device of claim 136 or 137, wherein a duration of the first period is determined based on a timing duration of a first timer, or the duration of the first period is determined based on first duration configuration information from the network device.

139. The network device of claim 131, wherein the first operation is determined based on a second condition, wherein the second condition is associated with one or more of:
whether a network device supports the terminal device in performing the first operation;
a priority of the one or more measurement occasions;
a priority of data to be transmitted;
a scheduling mode for the data to be transmitted, wherein the scheduling mode comprises CG-based scheduling and/or DG-based scheduling;
a priority of scheduling by the network device;
a remaining delay required for the data to be transmitted;
coverage condition information of the terminal device;
a transmission type for the data to be transmitted, wherein the transmission type comprises new transmission and/or retransmission;
whether a maximum number of discardable measurement occasions/measurement slots is exceeded; or
whether a maximum proportion of discardable measurement occasions/measurement slots is exceeded.

140. The network device of claim 139, wherein the priority of the data to be transmitted is determined based on one or more of:
a highest priority of the data to be transmitted; or
a priority of a logical channel with a minimum remaining delay.

141. The network device of claim 139 or 140, wherein the coverage condition information is determined based on one or more of:
signal quality of a serving cell;
signal quality of a neighbour cell;
a change in the signal quality of the serving cell;
a change in the signal quality of the neighbour cell; or
a signal quality difference between the serving cell and the neighbour cell.

142. The network device of any one of claims 139 to 141, further comprising:
a second receiving unit configured to receive third information sent by the terminal device, wherein the third information indicates that the first terminal device determines to perform the first operation.

143. The network device of claim 142, further comprising:
a second sending unit configured to send fourth information to the terminal device before the network device receives the third information sent by the terminal device, wherein the fourth information is used to request the terminal device to determine whether the first operation can be performed.

144. The network device of claim 142 or 143, wherein in a case where the terminal device performs UL transmission at the one or more measurement occasions, the third information is carried in an MAC CE or a physical uplink control channel (PUCCH).

145. The network device of claim 144, wherein the MAC CE or the PUCCH further indicates measurement objects associated with the one or more measurement occasions.

146. The network device of claim 144 or 145, wherein the MAC CE is a buffer status report (BSR) or a delay status report (DSR).

147. The network device of any one of claims 131 to 146, wherein the first configuration information is used to configure one or more of:
a first period, wherein the first period is used for the terminal device to perform the first operation; or
a second period, wherein the second period is used for the terminal device to determine whether to perform the first operation.

148. The network device of claim 147, wherein the first configuration information is used to configure one or more of:
a start time of the first period; or
a duration of the first period.

149. The network device of claim 148, wherein the first configuration information is used to configure a first timer, and the duration of the first period is determined based on a timing duration of the first timer.

150. The network device of any one of claims 147 to 149, wherein the second period comprises *X* time units preceding each of the one or more measurement occasions, wherein the time unit is a slot, a millisecond, or a symbol, and *X* is a positive integer greater than or equal to 1.

151. The network device of any one of claims 147 to 150, wherein a duration of the second period is associated with one or more of:
a measurement object;
a frequency range (FR); or
a measurement type, wherein the measurement type comprises an intra-frequency measurement and/or an inter-frequency measurement.

152. The network device of any one of claims 131 to 151, further comprising:
a third sending unit configured to send the terminal device one or more of:
second configuration information related to the RRM measurement;
third configuration information related to scheduling by the network device;
fourth configuration information used to configure a time-domain resource sharing mode between the one or more measurement occasions and data transmission;
fifth configuration information related to data status reporting by the terminal device; or
sixth configuration information used to configure a maximum number or a maximum proportion of discardable measurement occasions/measurement slots.

153. The network device of claim 152, wherein the second configuration information is used to configure one or more of:
whether a measurement object corresponding to the RRM measurement supports the terminal device in performing the first operation;
a priority of the measurement object corresponding to the RRM measurement; or
a measurement threshold corresponding to the RRM measurement.

154. The network device of claim 153, wherein the measurement threshold is associated with one or more of:
signal quality of a serving cell;
signal quality of a neighbour cell;
a signal quality difference between the serving cell and the neighbour cell;
a change in the signal quality of the serving cell; or
a change in the signal quality of the neighbour cell.

155. The network device of any one of claims 152 to 154, further comprising:
a third receiving unit configured to receive a measurement result sent by the terminal device and corresponding to the RRM measurement.

156. The network device of any one of claims 152 to 155, wherein the third configuration information is used to configure one or more of:
whether scheduling by the network device is allowed within the one or more measurement occasions; or
a priority of scheduling by the network device.

157. The network device of any one of claims 152 to 156, wherein the fifth configuration information is used to configure one or more of:
a threshold for a data volume;
a threshold for a data priority; or
a threshold for a remaining data delay.

158. The network device of any one of claims 152 to 157, further comprising:
a fourth receiving unit configured to receive a data status reported by the terminal device.

159. The network device of any one of claims 131 to 158, wherein the configuration information from the network device is associated with one of:
an FR;
a measurement type, wherein the measurement type comprises an intra-frequency measurement and/or an inter-frequency measurement;
a measurement object;
a data priority;
a remaining data delay;
a data volume;
cell information; or
a bandwidth part (BWP).

160. The network device of any one of claims 131 to 159, further comprising:
a fourth sending unit configured to:
send first capability information to the terminal device, wherein the first capability information indicates whether the network device supports the terminal device in performing the first operation; and/or
receive second capability information sent by the terminal device, wherein the second capability information indicates whether the terminal device is capable of performing the first operation.

161. The network device of any one of claims 131 to 160, wherein the period corresponding to the one or more measurement occasions comprises one or more of:
a measurement gap (MG); or
a slot or a symbol during which data transmission is interrupted during the RRM measurement.

162. The network device of claim 161, wherein the period corresponding to the one or more measurement occasions further comprises a third period preceding the one or more measurement occasions and/or a fourth period following the one or more measurement occasions.

163. A network device, comprising:
a sending unit configured to send second information to a terminal device, wherein the second information is used to:
reconfigure first configuration information used for radio resource management (RRM) measurement; or
indicate that the terminal device is to switch from the first configuration information to second configuration information used for RRM measurement.

164. The network device of claim 163, further comprising:
a receiving unit configured to receive first information sent by the terminal device before the network device sends the second information to the terminal device, wherein the first information indicates that a first condition is satisfied, and the first condition is associated with one or more of:
a reliability requirement of data to be transmitted;
a delay requirement of the data to be transmitted;
a remaining delay required for the data to be transmitted;
a mobility state of the terminal device; or
a position of the terminal device in a serving cell.

165. A terminal device, comprising:
a transceiver;
a memory configured to store a program, and
a processor configured to invoke the program stored in the memory and control the transceiver to receive or send signals, to cause the terminal device to perform the method of any one of claims 1 to 39 or 40 to 48.

166. A network device, comprising:
a transceiver;
a memory configured to store a program, and
a processor configured to invoke the program stored in the memory and control the transceiver to receive or send signals, to cause the network device to perform the method of any one of claims 49 to 80 or 81 to 82.

167. An apparatus, comprising:
a processor configured to invoke a program stored in a memory, to cause the apparatus to perform the method of any one of claims 1 to 39, 40 to 48, 49 to 80, or 81 to 82.

168. A chip, comprising:
a processor configured to invoke a program stored in a memory, to cause a device equipped with the chip to perform the method of any one of claims 1 to 39, 40 to 48, 49 to 80, or 81 to 82.

169. A computer-readable storage medium storing a program operable with a computer to perform the method of any one of claims 1 to 39, 40 to 48, 49 to 80, or 81 to 82.

170. A computer program product comprising a program operable with a computer to perform the method of any one of claims 1 to 39, 40 to 48, 49 to 80, or 81 to 82.

171. A computer program operable with a computer to perform the method of any one of claims 1 to 39, 40 to 48, 49 to 80, or 81 to 82.
